# EUROPEAN PATENT APPLICATION

(11) **EP 4 692 631 A1**
(43) Date of publication of application: **11.02.2026**
(21) Application number: 24780292.9
(22) Date of filing: 26.03.2024
(51) Int. Cl.: F16L 59/02, H01M 10/613, H01M 10/625, H01M 10/653, H01M 10/658

(54) **HEAT TRANSFER SUPPRESSION SHEET AND BATTERY PACK**

(30) Priority: 29.03.2023 JP 2023053783; 18.03.2024 JP 2024042573
(71) Applicant: IBIDEN CO., LTD., Ogaki-shi, Gifu 503-8604 (JP)
(72) Inventor: HAN, Mingxu, Ibi-gun, Gifu 501-0695 (JP)
(74) Representative: Hoffmann Eitle
(86) International application number: PCT/JP2024/011921
(87) International publication number: WO 2024/204180

(57) **Abstract**

To provide a heat transfer suppression sheet capable of further improving a heat insulation property, suppressing damage due to scattered matters during thermal runaway, and maintaining the heat insulation property, and a battery pack including the heat transfer suppression sheet. A heat transfer suppression sheet (50) includes: a heat insulation material (10) containing an inorganic particle (4) and an organic fiber (1) or an inorganic fiber (15); and a mica sheet (51) stacked on at least one of a first surface (10a) and a second surface (10b) of the heat insulation material (10) orthogonal to a thickness direction. In addition, a battery pack (100) includes a plurality of battery cells (20a, 20b, 20c) and the heat transfer suppression sheet (50), in which the plurality of battery cells (20a, 20b, 20c) are connected in series or in parallel.

## Description

### TECHNICAL FIELD

The present invention relates to a heat transfer suppression sheet and a battery pack including the heat transfer suppression sheet.

### BACKGROUND ART

In recent years, from the viewpoint of environmental protection, an electric vehicle or a hybrid vehicle driven by an electric motor has been actively developed. The electric vehicle or the hybrid vehicle is equipped with a battery pack in which a plurality of battery cells are connected in series or in parallel to serve as a power source for a driving electric motor.

In addition, a lithium ion secondary battery, which has higher capacity and is capable of higher output than a lead-acid battery, a nickel-metal hydride battery, or the like, is mainly used for the battery cells. When a certain battery cell suddenly rises in temperature due to an internal short circuit or overcharging of the battery, and then causes thermal runaway that continues to generate heat, the heat from the battery cell that has experienced thermal runaway may propagate to other adjacent battery cells, thereby causing thermal runaway in other battery cells.

As a method of suppressing the propagation of heat from the battery cell that has experienced thermal runaway as described above, a method of interposing a member having a heat insulation property between battery cells is generally used.

For example, Patent Literature 1 discloses an power storage apparatus including a power storage device (battery cell), a first plate member and a second plate member disposed on a side of the power storage device and disposed such that surfaces thereof face each other, and a low thermal conductivity layer disposed between the first plate member and the second plate member.

### CITATION LIST

### PATENT LITERATURE

Patent Literature 1: JP2015-211013A

### SUMMARY OF INVENTION

### TECHNICAL PROBLEM

In the power storage apparatus described in Patent Literature 1, the low thermal conductivity layer, for example, formed of air, is formed between the first plate member and the second plate member. However, in the case where the power storage device has a high temperature in the low thermal conductivity layer formed of air as in the power storage apparatus, convection of air occurs, and no sufficient heat insulation property can be obtained. Therefore, there is a demand for a heat transfer suppression sheet capable of maintaining an excellent heat insulation property even in the case where the power storage device is damaged and scattered.

The present invention has been made in view of the above problems, and an object of the present invention is to provide a heat transfer suppression sheet capable of further improving a heat insulation property, suppressing damage due to scattered matters during thermal runaway, and maintaining the heat insulation property, and a battery pack including the heat transfer suppression sheet.

### SOLUTION TO PROBLEM

The above object of the present invention is achieved by the following configuration [1] relating to a heat transfer suppression sheet.
[1] A heat transfer suppression sheet including:
   a heat insulation material containing an inorganic particle and an organic fiber or an inorganic fiber; and
   a mica sheet stacked on at least one of a first surface and a second surface of the heat insulation material orthogonal to a thickness direction.
   Preferred embodiments of the present invention relating to the heat transfer suppression sheet relate to the following [2] to [13].
[2] The heat transfer suppression sheet according to [1], in which the heat insulation material has a plurality of three-dimensionally connected pores.
[3] The heat transfer suppression sheet according to [1] or [2], in which in a case where the heat insulation material contains the organic fiber, the organic fiber includes a fusion portion covering at least a portion of a surface of the organic fiber, and at least a portion of the inorganic particle is fused to the organic fiber by the fusion portion.
[4] The heat transfer suppression sheet according to any one of [1] to [3], in which the heat insulation material essentially contains the inorganic fiber.
[5] The heat transfer suppression sheet according to any one of [1] to [4], in which the inorganic fiber is at least one kind selected from a silica-alumina fiber, an alumina fiber, a silica fiber, rock wool, an alkaline earth silicate fiber, and a glass fiber.
[6] The heat transfer suppression sheet according to [3] or [4], in which the heat insulation material includes a fiber layer on at least a portion of the first surface and the second surface, the fiber layer being formed by at least partially fusing a plurality of the organic fibers to each other by the fusion portion.
[7] The heat transfer suppression sheet according to [6], in which
   the heat insulation material essentially contains the inorganic fiber, and
   the fiber layer contains the inorganic fiber.
[8] The heat transfer suppression sheet according to any one of [3] to [7], in which
   in the heat insulation material, the organic fiber is composed of a first organic material, and the fusion portion contains a second organic material, and
   a melting point of the second organic material is lower than a melting point of the first organic material.
[9] The heat transfer suppression sheet according to [8], in which in the heat insulation material, the melting point of the second organic material is lower than the melting point of the first organic material by 60°C or more.
[10] The heat transfer suppression sheet according to [8] or [9], in which
   in the heat insulation material,
   the first organic material is at least one kind selected from a polyethylene terephthalate, a polypropylene, and nylon, and
   the second organic material is at least one kind selected from a polyethylene terephthalate, a polyethylene, a polypropylene, and nylon.
[11] The heat transfer suppression sheet according to any one of [1] to [10], in which in the heat insulation material, the inorganic particle is a particle composed of at least one kind of inorganic material selected from an oxide particle, a carbide particle, a nitride particle, and an inorganic hydrate particle.
[12] The heat transfer suppression sheet according to [11], in which in the heat insulation material, the inorganic particle includes at least one kind of particle selected from a dry silica particle and silica aerogel.
[13] The heat transfer suppression sheet according to [12], in which in the heat insulation material, the inorganic particle further includes at least one kind of particle selected from titania, zircon, zirconia, silicon carbide, zinc oxide, and alumina.
   The above object of the present invention is also achieved by the following configuration [14] relating to a battery pack.
[14] A battery pack including: a plurality of battery cells, and the heat transfer suppression sheet according to any one of [1] to [13], in which the plurality of battery cells are connected in series or in parallel.

### ADVANTAGEOUS EFFECTS OF INVENTION

Since the heat transfer suppression sheet according to the present invention includes a heat insulation material containing an inorganic particle and an organic fiber or an inorganic fiber, an excellent heat insulation property can be obtained. In addition, since the mica sheet is stacked on the heat insulation material, for example, in the case where the battery cell is damaged and scattered, the heat insulation material is protected by the mica sheet. Therefore, it is possible to prevent the heat insulation material from being damaged by scattered matters, and it is possible to maintain the heat insulation property.

Since the battery pack according to the present invention includes the above heat transfer suppression sheet having a high heat insulation property and capable of maintaining the high heat insulation property even in the case where the battery cell is damaged and scattered, thermal runaway of the battery cell in the battery pack and spread of flame to the outside of a battery case can be suppressed.

### BRIEF DESCRIPTION OF DRAWINGS

[Fig. 1] Fig. 1 is a cross-sectional view schematically showing a heat transfer suppression sheet according to an embodiment of the present invention.
[Fig. 2] Fig. 2 is a cross-sectional view schematically showing a battery pack including the heat transfer suppression sheet according to the embodiment of the present invention.
[Fig. 3] Fig. 3 is a photograph substituted for a drawing showing Structure Example 1 of a heat insulation material for use in the heat transfer suppression sheet according to the embodiment of the present invention.
[Fig. 4] Fig. 4 is a photograph substituted for a drawing showing an enlarged view of a portion of the heat insulation material shown in Fig. 3.
[Fig. 5] Fig. 5 is a photograph substituted for a drawing showing Structure Example 2 of the heat insulation material for use in the heat transfer suppression sheet according to the embodiment of the present invention.
[Fig. 6] Fig. 6 is a schematic diagram showing Structure Example 3 of the heat insulation material for use in the heat transfer suppression sheet according to the embodiment of the present invention.
[Fig. 7] Fig. 7 is a schematic diagram showing an enlarged view of a portion of Fig. 6. Fig. 8 is a photograph substituted for a drawing showing the heat insulation material shown in Fig. 6.
[Fig. 8] Fig. 8 is a photograph substituted for a drawing showing the heat insulation material shown in Fig. 6.
[Fig. 9] Fig. 9 is a photograph substituted for a drawing showing Structure Example 4 of the heat insulation material for use in the heat transfer suppression sheet according to the embodiment of the present invention.
[Fig. 10] Fig. 10 is a photograph substituted for a drawing showing an enlarged structure of the heat insulation material shown in Fig. 9.
[Fig. 11] Fig. 11 is a photograph substituted for a drawing showing a cross section of the heat insulation material shown in Fig. 9.
[Fig. 12] Fig. 12 is a schematic diagram showing Structure Example 5 of the heat insulation material for use in the heat transfer suppression sheet according to the embodiment of the present invention.
[Fig. 13] Fig. 13 is a schematic diagram showing an enlarged view of a portion A of the heat insulation material shown in Fig. 12.
[Fig. 14] Fig. 14 is a photograph substituted for a drawing showing Structure Example 6 of the heat insulation material for use in the heat transfer suppression sheet according to the embodiment of the present invention.
[Fig. 15] Fig. 15 is a photograph substituted for a drawing showing another region of the heat insulation material shown in Fig. 14.
[Fig. 16] Fig. 16 is a photograph substituted for a drawing showing a cross section of the heat insulation material shown in Figs. 14 and 15.
[Fig. 17] Fig. 17 is a photograph substituted for a drawing showing Structure Example 7 of the heat insulation material for use in the heat transfer suppression sheet according to the embodiment of the present invention.
[Fig. 18] Fig. 18 is a photograph substituted for a drawing showing an enlarged view of a portion of the heat insulation material shown in Fig. 17.
[Fig. 19] Fig. 19 is a schematic diagram illustrating an example of a method for defining a length of a fiber bundle.
[Fig. 20] Fig. 20 is a photograph substituted for a drawing showing another Structure Example of the heat insulation material shown in Fig. 17.

### DESCRIPTION OF EMBODIMENTS

The inventor of the present invention has found that the above problems can be solved by forming a heat transfer suppression sheet including a heat insulation material containing an inorganic particle and an organic fiber or an inorganic fiber, and a mica sheet stacked on the heat insulation material.

Hereinafter, a heat transfer suppression sheet, a production method therefor, and a battery pack according to an embodiment of the present invention will be described in detail. Note that, the present invention is not limited to the embodiment described below, and can be freely changed and implemented without departing from the gist of the present invention. Hereinafter, the heat transfer suppression sheet according to the embodiment of the present invention will be described.

### [Heat Transfer Suppression Sheet]

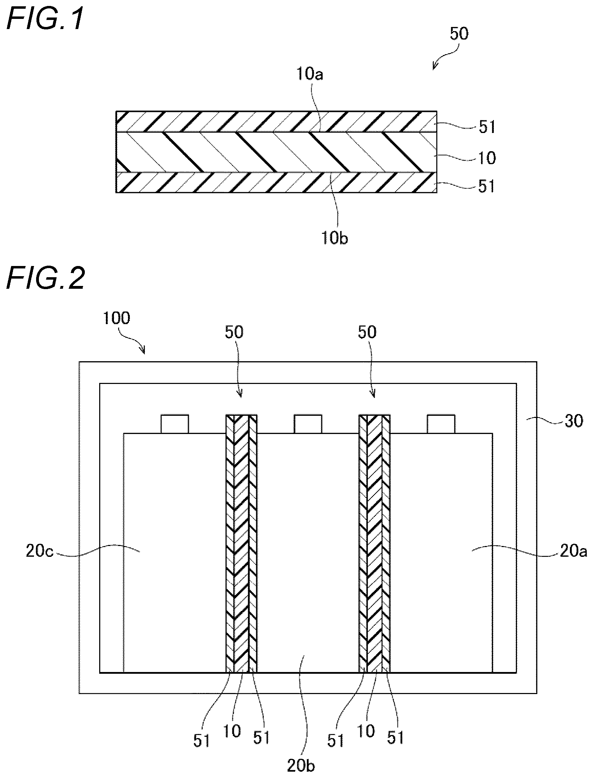

Fig. 1 is a cross-sectional view schematically showing the heat transfer suppression sheet according to the embodiment of the present invention. As shown in Fig. 1, a heat transfer suppression sheet 50 according to the present embodiment includes a heat insulation material 10, and mica sheets 51 stacked on a first surface 10a and a second surface 10b of the heat insulation material 10 orthogonal to a thickness direction. The heat insulation material 10 includes an inorganic particles and an organic fiber or an inorganic fiber, which are not shown. The heat insulation material 10 will be described in detail later. The mica sheet 51 is obtained by processing a mica sheet material containing mica into a sheet shape.

As a specific usage form of the heat transfer suppression sheet 50, as shown in Fig. 2, the heat transfer suppression sheet 50 can be used to be interposed between a plurality of battery cells 20a, 20b, and 20c. A battery pack 100 is formed by housing the plurality of battery cells 20a, 20b, and 20c in a battery case 30 in a state where the battery cells 20a, 20b, and 20c are connected in series or in parallel (the connected state is not shown). Note that, the battery cells 20a, 20b, and 20c are, for example, preferably a lithium ion secondary battery, but is not particularly limited thereto, and may be applied to other secondary batteries.

Since the heat transfer suppression sheet 50 according to the present embodiment configured in this manner includes the heat insulation material 10 containing an inorganic particle and an organic fiber or an inorganic fiber, an excellent heat insulation property can be obtained. Therefore, for example, in the case where an abnormality occurs in the battery cell 20a and the temperature rises, the propagation of heat to the battery cell 20b can be sufficiently suppressed.

In the present embodiment, the mica sheet 51 is separately stacked on the first surface 10a and the second surface 10b of the heat insulation material 10. Mica has excellent heat resistance and insulating properties, and the mica sheet 51 obtained by processing a material containing mica into a sheet shape also has excellent impact resistance. Therefore, for example, in the case where the battery cell 20a ruptures due to a high temperature and scattered matters are generated, since the heat insulation material 10 is protected by the mica sheet 51, it is possible to suppress damage to the heat insulation material 10. As a result, a high heat insulation property can be maintained between the battery cell 20a and the battery cell 20b.

Note that, in the present embodiment, the mica sheet 51 is separately stacked on the first surface 10a and the second surface 10b of the heat insulation material 10, but the present invention is not limited to such a configuration. When it is desired to protect the heat insulation material 10 against an impact from only one surface of the heat transfer suppression sheet 50, the mica sheet 51 only needs to be disposed on at least one of the first surface 10a and the second surface 10b of the heat insulation material 10. In addition, the mica sheet 51 may be interposed between a pair of heat insulation materials 10. In any configuration, it is possible to suppress the influence of scattered matters or the like on the heat insulation material, other adjacent battery cells, and the like, it is possible to obtain a high heat insulation property, and it is possible to maintain the heat insulation property.

In the present embodiment, the heat insulation material 10 only needs to contain an inorganic particle and an organic fiber or an inorganic fiber (that is, at least one of the organic fiber and the inorganic fiber), and an example of the heat insulation material 10 having a more excellent heat insulation property will be described in detail below.

### <Heat Insulation Material (Structure Example 1)>

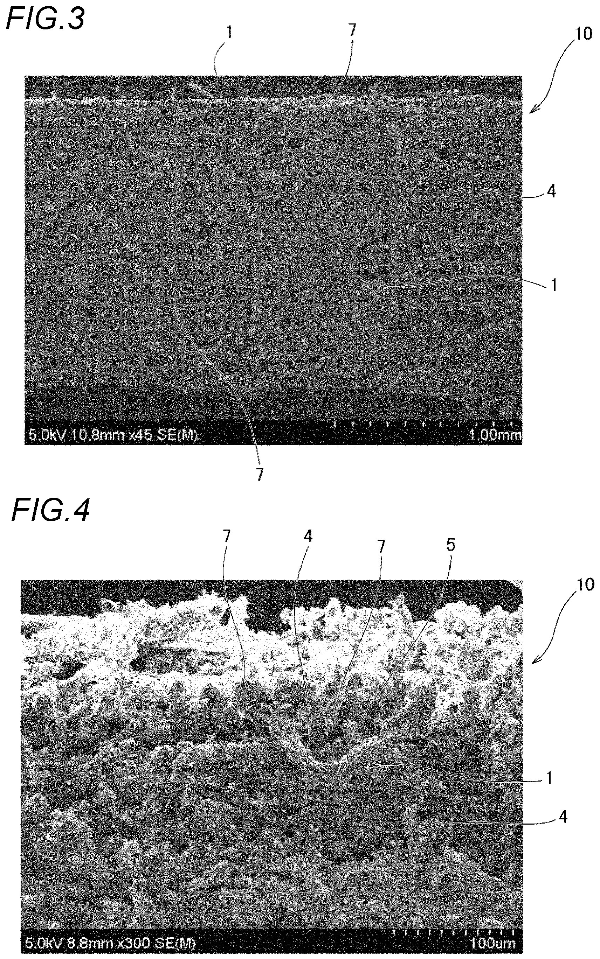

Fig. 3 is a photograph substituted for a drawing showing Structure Example 1 of a heat insulation material for use in the heat transfer suppression sheet according to the embodiment of the present invention. Fig. 4 is a photograph substituted for a drawing showing an enlarged view of a portion of the heat insulation material shown in Fig. 3.

As shown in Figs. 3 and 4, the heat insulation material 10 according to this heat insulation material (Structure Example 1) contains an inorganic particle 4 and an organic fiber 1. In addition, the heat insulation material 10 includes a plurality of three-dimensionally connected pores 7 between the inorganic particle 4 and the organic fiber 1. Note that, the organic fiber 1 includes a fusion portion 5 covering at least a portion of a surface thereof, and at least a portion of the inorganic particle 4 is fused to the surface of the organic fiber 1 by the fusion portion 5. Accordingly, the surface of the organic fiber 1 is covered with the inorganic particle 4.

Since the heat insulation material 10 in this manner includes the three-dimensionally connected pores 7, an air heat insulation effect can be obtained, and a heat insulation performance can be improved. In addition, since the heat insulation material 10 contains the organic fiber 1 having high flexibility, the flexibility of the heat insulation material 10 can be improved, the organic fibers 1 are easily entangled with each other, and an effect of improving a sheet strength can be obtained. Further, when the pores 7 are present in the heat insulation material 10, a cushioning property of the entire sheet is improved. Therefore, when the battery cells 20a, 20b, and 20c expand during charging and discharging, the heat insulation material 10 can absorb the expansion of the battery cells. Therefore, it is possible to suppress breakage of a heat transfer suppression sheet including such a heat insulation material 10.

Further, in the present embodiment, it is preferable that at least some of the pores 7 communicate with the surface of the heat insulation material 10 and open towards the outside. Once the pores 7 are configured in this manner, when an adjacent battery cell 20a, 20b, or 20c experiences thermal runaway, even in the case where the heat insulation material 10 reaches a high temperature and the organic fiber 1 is decomposed, a decomposition gas does not remain inside the sheet but is released to the outside through the pores 7. Therefore, from this viewpoint, the effect of preventing the sheet from being damaged can be also obtained.

When the fusion portion 5 on an outer peripheral surface of the organic fiber 1 fixes the inorganic particle 4 to the organic fiber 1, it is possible to obtain an effect of suppressing the inorganic particle 4 from falling off (powder falling). Therefore, for example, even in the case where a portion of the battery cells 20a, 20b, and 20c expands and a compressive stress or impact is applied to the heat transfer suppression sheet 50, an effect of retaining a shape of the heat insulation material 10 can be further improved, and a decrease in heat insulation effect due to compressive deformation of the heat insulation material 10 can be prevented.

In the present description, the fusion portion 5 refers to a portion where the surface of the organic fiber 1 has melted and then solidified again, and is formed during a process of producing the heat insulation material 10, which will be described later. In the present embodiment, since the inorganic particle 4 is fused to the surface of the organic fiber 1 by the fusion portion 5, an apparent fiber diameter of the organic fiber 1 is larger, the shape of the heat insulation material 10 can be supported, and a high strength can be obtained.

Note that, the fusion portion 5 does not need to completely cover the outer peripheral surface of the organic fiber 1, and there may be a region where the fusion portion 5 is not present. In the heat insulation material 10, as a material for the organic fiber 1, a binder fiber having a core-sheath structure, which will be described later, can be used. However, when a sheath portion is peeled off during the production process, the organic fiber 1, which is a core portion, may be partially exposed. Even in such a case, the effect of retaining the inorganic particle 4 can be sufficiently obtained.

The heat insulation material 10 according to this heat insulation material (Structure Example 1) preferably further contains an inorganic fiber. An effect obtained by containing the inorganic fiber will be described in the following "Heat Insulation Material (Structure Example 2)".

### <Heat Insulation Material (Structure Example 2)>

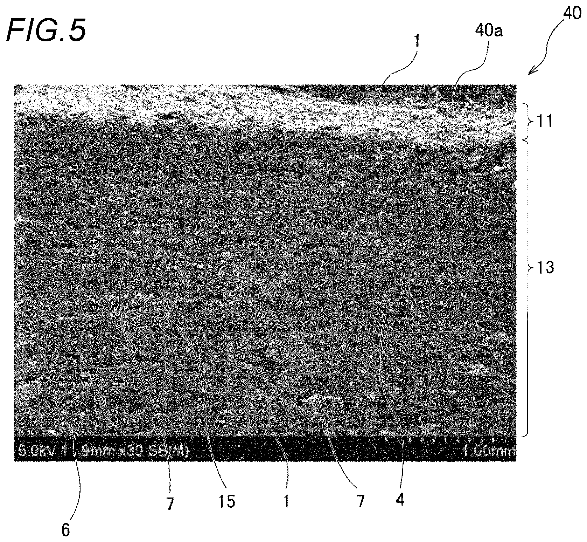

Fig. 5 is a photograph substituted for a drawing showing Structure Example 2 of the heat insulation material for use in the heat transfer suppression sheet according to the embodiment of the present invention. In Structure Example 2 shown in Fig. 5, the same components as those in Structure Example 1 shown in Figs. 3 and 4 are denoted by the same reference numerals, and detailed description thereof will be omitted. Note that, a heat insulation material 40 shown in Fig. 5 can be used instead of the heat insulation material 10 of the heat transfer suppression sheet 50 shown in Fig. 1.

As shown in Fig. 5, the heat insulation material 40 includes an inorganic fiber 15. In addition, a fiber layer 11 is formed on at least a portion of a first surface 40a and a second surface (not shown) of the heat insulation material 40 that are orthogonal to a thickness direction of the heat insulation material 40. The fiber layer 11 is formed in a layer shape on the surface (first surface and second surface) of the heat insulation material 40 by at least partially fusing the plurality of organic fibers 1 to each other by the fusion portion. That is, the fiber layer 11 is a layer formed by gathering 10 or more organic fibers 1 on the surface of the heat insulation material 40, and extends in a direction substantially parallel to the surface, for example, in a stripe shape.

Further, between the fiber layer 11 and a base layer 13 containing the inorganic particle 4 and the organic fiber 1, a composite layer (not shown) in which a portion of the fiber layer 11 and a portion of the inorganic particle 4 are mixed is formed. Specifically, the composite layer is a region including a plurality of organic fibers 1 at least partially fused to each other by the fusion portion, and the inorganic particle 4 fused to the organic fiber 1 by the fusion portion.

Note that, in the heat insulation material 40 shown in Fig. 5, the inorganic fiber 15 is contained in the base layer 13 containing the inorganic particle 4 and the organic fiber 1, but may also be contained in the fiber layer 11. In Fig. 5, the inorganic fiber 15 in the fiber layer 11 is not shown since it cannot be distinguished.

Further, the heat insulation material 40 includes a fiber bundle 6 formed by at least partially fusing a plurality of organic fibers 1 to each other by the fusion portion 5. The fiber bundle 6 is formed by entangling 10 or more organic fibers 1 with each other and partially fusing the organic fibers 1 to each other, and is disposed in any direction in the heat insulation material 40.

The heat insulation material 40 configured in this manner contains the inorganic fiber 15 that is less likely to be decomposed even at a high temperature. Therefore, for example, in the case where the battery cell 20a experiences thermal runaway and the heat transfer suppression sheet 50 disposed adjacent to the battery cell 20a is exposed to a high temperature, even when the organic fiber 1 in the heat insulation material 40 is decomposed, the inorganic fiber 15 remains, so that the shape of the heat insulation material 40 can be reliably retained.

In addition, since the organic fiber 1 having flexibility tends to be entangled with the inorganic fiber 15, which is relatively hard, and a three-dimensional framework is formed by the inorganic fiber 15 and the organic fiber 1, the strength of the heat insulation material 40 can be further improved.

Note that, in "Heat Insulation Material (Structure Example 2)", the heat insulation material 40 contains the organic fiber 1 in addition to the inorganic fiber 15, but even in the case where the heat insulation material 40 does not contain the organic fiber 1 but contains only the inorganic particle 4 and the inorganic fiber 15, it is needless to say that the inorganic fiber 15 remains as described above, and the effect that the shape of the heat insulation material 40 can be reliably retained is obtained.

The case where the heat insulation material 40 contains both the organic fiber 1 and the inorganic fiber 15 is particularly preferred since the effect that "the flexibility of the heat insulation material 10 can be improved, the organic fibers 1 are easily entangled with each other, and an effect of improving a sheet strength can be obtained because of containing the organic fiber 1 having high flexibility" and the effect that "in the case where the heat transfer suppression sheet 50 is exposed to a high temperature, even when the organic fiber 1 in the heat insulation material 40 is decomposed, the inorganic fiber 15 remains, so that the shape of the heat insulation material 40 can be reliably retained" can be exhibited at the same time.

Further, when the heat insulation material 40 includes the fiber layer 11 on the surface and includes the fiber bundle 6 therein, a much higher strength can be obtained than the case where the organic fibers 1 are disposed in a dispersed manner. Note that, the fiber layer 11 is not simply disposed on the base layer 13, and the composite layer, in which a portion of the fiber layer 11 and a portion of the inorganic particle 4 are mixed together, is provided between the fiber layer 11 and the base layer 13, so that the fiber layer 11 is reliably restrained to the surface of the heat insulation material 40. Therefore, only the fiber layer 11 does not fall off, and the heat insulation material 40 having a high strength can be obtained. Since the mica sheet is stacked on the heat insulation material 40, a more excellent strength can be obtained.

Further, when the fiber layer 11 is formed on the surface of the heat insulation material 40, the fiber layer 11 can absorb the impact applied to the heat insulation material 40, and thus the effect of preventing the inorganic particle contained in the heat insulation material 40 from falling off can be obtained.

### <Heat Insulation Material (Structure Example 3)>

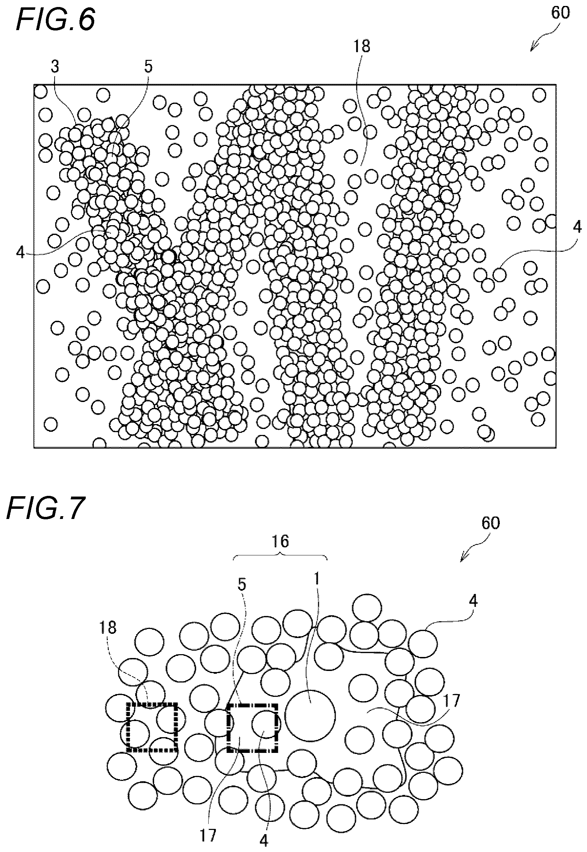

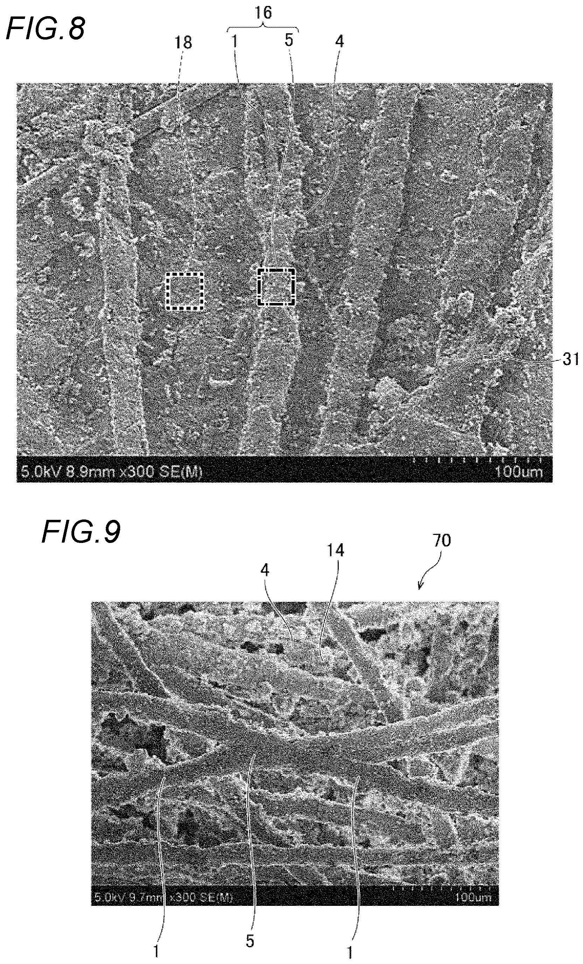

Fig. 6 is a schematic diagram showing Structure Example 3 of the heat insulation material for use in the heat transfer suppression sheet according to the embodiment of the present invention. Fig. 7 is a schematic diagram showing an enlarged view of a portion of Fig. 6. Fig. 8 is a photograph substituted for a drawing showing the heat insulation material shown in Fig. 6. In Structure Example 3 shown in Figs. 6 to 8, the same components as those in Structure Example 1 shown in Figs. 3 and 4 are denoted by the same reference numerals, and detailed description thereof will be omitted. Note that, a heat insulation material 60 shown in Figs. 6 to 8 can be used instead of the heat insulation material 10 of the heat transfer suppression sheet 50 shown in Fig. 1.

As shown in Figs. 6 to 8, the heat insulation material 60 according to the present embodiment contains the inorganic particle 4, the organic fiber 1 composed of a first organic material, and the fusion portion 5 covering the outer peripheral surface of the organic fiber 1. As described above, the fusion portion 5 contains a second organic material 17 having a melting point lower than a melting point of the first organic material, and the inorganic particle 4. Note that, in the present embodiment, a binder fiber 3 having a core-sheath structure including a core portion and a sheath portion covering an outer peripheral surface of the core portion is used as the organic fiber, and the organic fiber 1 corresponds to the core portion. In addition, the fusion portion 5 is formed by once melting the sheath portion of the binder fiber 3 having a core-sheath structure by heating and then performing cooling. Further, as shown in Fig. 8, a fiber portion 16 is formed by the organic fiber 1 and the fusion portion 5 containing the inorganic particle 4, and a base material portion 18 containing an inorganic particle is formed between a plurality of fiber portions 16. In addition, when the melted sheath portion is cooled, adjacent organic fibers 1 are fused to each other in a contact portion 31 to form a three-dimensional framework.

In the heat insulation material 60 configured in this manner, since the organic fiber 1 and the fusion portion 5 act as a framework, an excellent strength and shape retention property can be obtained. In addition, since the fusion portion 5 covering the outer peripheral surface of the organic fiber fixes the inorganic particle 4 to the organic fiber 1 on both a surface side and a center side of the heat insulation material 60, the powder falling can be suppressed. Therefore, for example, even in the case where the heat transfer suppression sheet 50 according to the present embodiment is disposed between a plurality of battery cells, and the battery cells expand to apply a compressive stress or impact to the heat transfer suppression sheet 50, an excellent heat insulation performance can be maintained.

Although a mechanism by which the falling off of the inorganic particle 4 (powder falling) can be suppressed in the heat insulation material 60 is not clear, it is thought that one of reasons is that deformation or compression of the heat insulation material 60 is suppressed since the organic fiber 1 and the fusion portion 5 form a three-dimensional and strong framework and the shape of the heat insulation material 60 is retained. In addition, regardless of the presence or absence of the mica sheet 51 on the surface of the heat insulation material 60, the fiber portion 16 exposed on the surface of the heat insulation material 60 can absorb the impact applied to the heat insulation material 60, which is also thought to be the reason why the inorganic particle 4 is retained.

Note that, as shown in Fig. 8, in the heat insulation material 60, the fusion portion 5 does not need to completely cover the outer peripheral surface of the organic fiber 1, and the organic fiber 1 may be partially exposed. Since the binder fiber 3 having a core-sheath structure is used in the heat insulation material 60, the sheath portion may peel off during a process of producing the heat insulation material 60, and even in the case where the organic fiber 1 is partially exposed, the effects of the present invention can be sufficiently obtained.

### <Heat Insulation Material (Structure Example 4)>

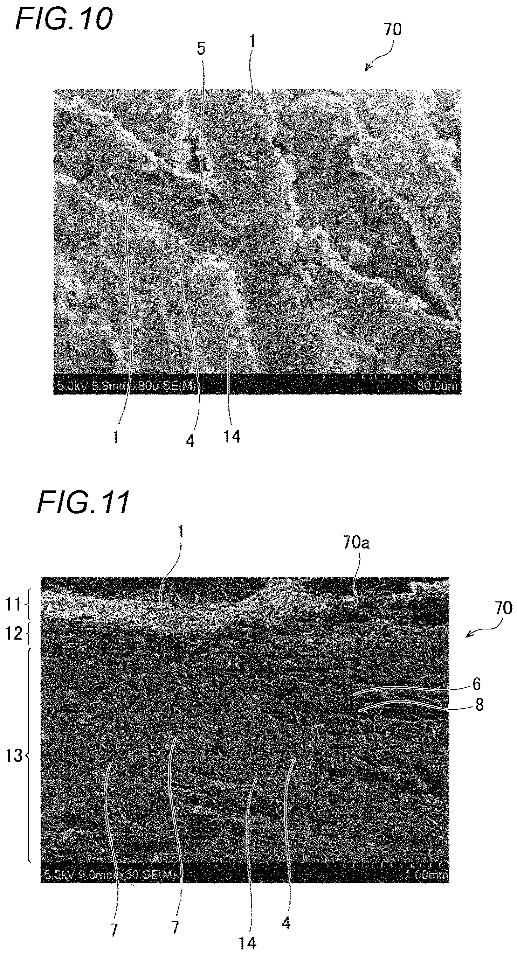

Fig. 9 is a photograph substituted for a drawing showing Structure Example 4 of the heat insulation material for use in the heat transfer suppression sheet according to the embodiment of the present invention. Fig. 10 is a photograph substituted for a drawing showing an enlarged structure of the heat insulation material shown in Fig. 9. Fig. 11 is a photograph substituted for a drawing showing a cross section of the heat insulation material shown in Fig. 9. In Structure Example 4 shown in Figs. 9 to 11, the same components as those in Structure Example 1 shown in Figs. 3 and 4 are denoted by the same reference numerals, and detailed description thereof will be omitted. Note that, a heat insulation material 70 shown in Figs. 9 to 11 can be used instead of the heat insulation material 10 of the heat transfer suppression sheet 50 shown in Fig. 1.

As shown in Figs. 9 and 10, the heat insulation material 70 contains a matrix 14 containing the inorganic particle 4, and the organic fiber 1 three-dimensionally oriented in the matrix 14. The organic fiber 1 includes the fusion portion 5 covering at least a portion of a surface thereof, and the organic fibers 1 are fused to each other by the fusion portion 5. Similarly, the inorganic particle 4 is also fused to the surface of the organic fiber 1, and accordingly, the surface of the organic fiber 1 is covered with the inorganic particle 4.

In addition, as shown in the cross-sectional view in Fig. 11, a plurality of pores 7 are formed in the matrix 14 of the heat insulation material 70. Further, in the matrix 14, the organic fibers 1 are at least partially fused to each other by the fusion portion 5 (not shown in Fig. 11), to form the fiber bundle 6, and a void portion 8 is formed between a plurality of organic fibers 1 constituting the fiber bundle 6.

Further, the fiber layer 11 is formed on at least a portion of a first surface 70a and a second surface (not shown) of the heat insulation material 70 that are orthogonal to a thickness direction of the heat insulation material 70. The fiber layer 11 is formed in a layer shape on the surface (first surface and second surface) of the heat insulation material 70 by at least partially fusing the plurality of organic fibers 1 to each other by the fusion portion 5. In addition, a composite layer 12 is formed between the fiber layer 11 and the base layer 13 containing the matrix 14 and the organic fiber 1. The composite layer 12 is a layer in which a portion of the fiber layer 11 and a portion of the matrix 14 are mixed together. Specifically, the composite layer 12 is a region including a plurality of organic fibers 1 at least partially fused to each other by the fusion portion 5, and the inorganic particle 4 fused to the organic fiber 1 by the fusion portion 5.

Note that, the fiber bundle 6 is formed by entangling 10 or more organic fibers 1 with each other and partially fusing the organic fibers 1 to each other, and is disposed in any direction in the matrix 14 of the heat insulation material 70. On the other hand, the fiber layer 11 is a layer formed by gathering 10 or more organic fibers 1 on the surface of the heat insulation material 70, and extends in a direction substantially parallel to the surface, for example, in a stripe shape.

In the heat insulation material 70 configured in this manner, the organic fibers 1 are three-dimensionally oriented in the matrix 14, and the organic fiber 1 includes the fusion portion 5 covering at least a portion of the surface thereof. The fusion portion 5 refers to a portion where the surface of the organic fiber 1 has melted and then solidified again, and is formed during a process of producing the heat insulation material 70. In the heat insulation material 70, since the three-dimensionally oriented organic fibers 1 are fused to each other by the fusion portion 5, this structure serves as a framework to support the shape of the heat insulation material 70 and to obtain a high strength.

Similarly, in the heat insulation material 70, since the fusion portion 5 on the outer peripheral surface of the organic fiber 1 also fixes the inorganic particle 4 to the organic fiber 1, an even higher powder falling suppression effect can be obtained. Therefore, for example, even in the case where a portion of the battery cells 20a, 20b, and 20c expands and a compressive stress or impact is applied to the heat transfer suppression sheet 50 during charging and discharging, the shape of the heat insulation material 70 can be retained. As a result, it is possible to suppress falling of the inorganic particle 4 (powder falling), and it is possible to prevent a decrease in heat insulation effect due to compressive deformation of the heat insulation material 70.

In the heat insulation material 70, the mechanism by which the falling off of the inorganic particle 4 from the sheet surface can be suppressed is thought to be the same as that of the heat insulation material 60 of Structure Example 3.

Note that, also in the heat insulation material 70, the fusion portion 5 does not need to completely cover the outer peripheral surface of the organic fiber 1, and there may be a region where the fusion portion 5 is not present. Even in such a case, the effect of retaining the inorganic particle 4 can be sufficiently obtained.

In addition, since the heat insulation material 70 contains the organic fiber 1 having high flexibility, the flexibility of the heat insulation material 70 can be improved, the organic fibers 1 are easily entangled with each other, and the effect of improving the sheet strength can be obtained.

Further, in the heat insulation material 70, since the matrix 14 has the plurality of pores 7 and the void portion 8 is provided between the plurality of organic fibers 1 constituting the fiber bundle 6, the heat insulation performance can be improved. In addition, due to the presence of the void portion 8, the organic fiber 1 is less likely to be restrained in the matrix 14, so that the flexibility and the strength of the heat insulation material 70 can be further improved. The void portion 8 does not need to be formed in the entire region between the plurality of organic fibers 1, and as long as the void portion 8 is formed at least partially between the organic fibers 1, a heat transfer suppression effect can be obtained.

Further, the heat insulation material 70 includes the fiber bundle 6 and the fiber layer 11, and therefore can have a much higher strength than the case where the organic fibers 1 are disposed in a dispersed manner. The fiber layer 11 is not simply disposed on the base layer 13, and the composite layer 12, in which a portion of the fiber layer 11 and a portion of the inorganic particle 4 constituting the matrix 14 are mixed together, is provided between the fiber layer 11 and the base layer 13, so that the fiber layer 11 is reliably restrained to the surface of the heat insulation material 70. Therefore, the heat insulation material 70 having a high strength can be obtained.

### <Heat Insulation Material (Structure Example 5)>

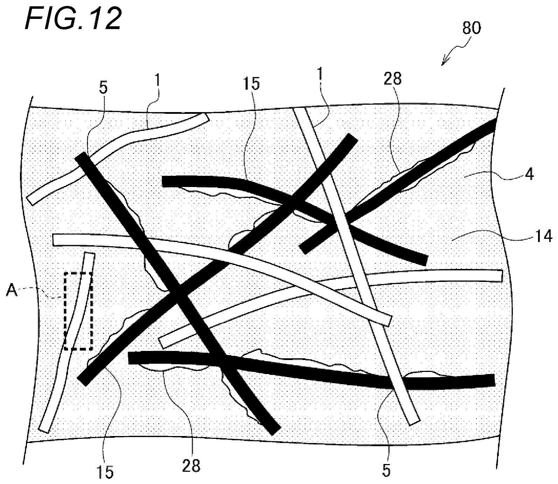

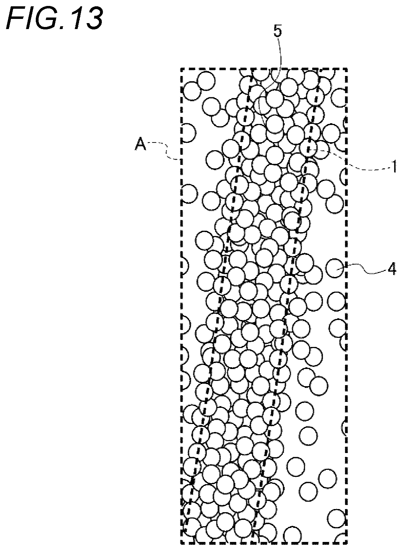

Fig. 12 is a schematic diagram showing Structure Example 5 of the heat insulation material for use in the heat transfer suppression sheet according to the embodiment of the present invention. Fig. 13 is a schematic diagram showing an enlarged view of a portion A of the heat insulation material shown in Fig. 12. In Structure Example 5 shown in Figs. 12 and 13, the same components as those in Structure Example 1 of the heat insulation material shown in Figs. 3 and 4 are denoted by the same reference numerals, and detailed description thereof will be omitted. Note that, a heat insulation material 80 shown in Figs. 12 and 13 can be used instead of the heat insulation material 10 of the heat transfer suppression sheet 50 shown in Fig. 1.

As shown in Figs. 12 and 13, the heat insulation material 80 contains the matrix 14 containing the inorganic particle 4, the inorganic fiber 15 dispersed in the matrix 14, and the organic fiber 1. The organic fiber 1 and the inorganic fiber 15 are entangled with each other to form a three-dimensional web structure. Note that, in the present embodiment, an air layer 28 is formed in a portion of a periphery of the inorganic fiber 15. In addition, the organic fiber 1 includes the fusion portion 5 on a portion of the surface, and at least a portion of the inorganic fiber 15 is fused to the organic fiber 1 by the fusion portion 5. Further, at least a portion of the inorganic particle 4 is fused to the organic fiber 1 by the fusion portion 5.

Note that, in the present description, the inorganic fiber 15 being "dispersed" indicates a state where the inorganic fibers 15 are disposed to spread as a whole without being extremely unevenly distributed.

In the heat insulation material 80 configured in this manner, the organic fiber 1 and the inorganic fiber 15 are entangled with each other to form a three-dimensional web structure, and this structure serves as a framework, so that a high strength can be obtained. Therefore, even in the case where the heat transfer suppression sheet 50 is compressed due to expansion of the battery cells during charging and discharging of the battery cells 20a, 20b, and 20c, the shape of the heat insulation material 80 can be retained. As a result, it is possible to suppress falling of the inorganic particle 4 (powder falling), and it is possible to prevent a decrease in heat insulation effect due to compressive deformation of the heat insulation material 80.

In addition, since the heat insulation material 80 contains the organic fiber 1 having high flexibility, the flexibility of the heat insulation material 80 can be improved, the organic fiber 1 is entangled with the inorganic fiber 15 to easily form a three-dimensional web structure, and the strength can also be improved. On the other hand, when the heat insulation material 80 does not contain the inorganic fiber 15, for example, in the case where the battery cell 20a experiences thermal runaway and the heat transfer suppression sheet disposed adjacent to the battery cell 20a is exposed to a high temperature, the organic fiber 1 is decomposed, and the shape of the heat transfer suppression sheet cannot be retained. Therefore, since the heat insulation material 80 contains the organic fiber 1 having high flexibility and the inorganic fiber 15 that is not decomposed even at a high temperature, a heat transfer suppression sheet having both flexibility and strength in a well-balanced manner can be obtained.

Further, in the present embodiment, the air layer 28 is provided around the inorganic fiber 15 dispersed in the matrix 14. The inorganic fiber 15 has a thermal conductivity higher than that of the organic fiber 1, but as described above, since the air layer 28 is formed around the inorganic fiber 15, heat transfer between the inorganic fiber 15 and the matrix 14 can be suppressed. Note that, although the air layer 28 is formed in a process of producing the heat insulation material 80, the air layer 28 does not need to be formed entirely around the inorganic fiber 15, and the heat transfer suppression effect can be obtained as long as the air layer 28 is formed on at least a portion of an outer peripheral surface of the inorganic fiber 15.

When the inorganic fiber 15 is uniformly dispersed in the matrix 14, the air layer 28 in the matrix 14 is also uniformly dispersed, and thus the heat insulation material 80 can obtain a high heat insulation property without unevenness.

Further, in the heat insulation material 80, the organic fiber 1 includes the fusion portion 5 covering at least a portion of the surface. The fusion portion 5 refers to a portion where the surface of the organic fiber 1 has melted and then solidified again, and is formed during a process of producing the heat insulation material 80. When at least a portion of the inorganic fiber 15 is fused to the organic fiber 1 by the fusion portion 5, the organic fiber 1 and the inorganic fiber 15 entangled with each other are fixed, so that the heat insulation material 80 having an even higher strength can be obtained.

Similarly, in the present embodiment, since the fusion portion 5 on the outer peripheral surface of the organic fiber 1 also fixes the inorganic particle 4 to the organic fiber 1, an even higher powder falling suppression effect can be obtained. Therefore, for example, even in the case where a portion of the battery cells 20a, 20b, and 20c expands and a compressive stress or impact is applied to the heat transfer suppression sheet, an excellent heat insulation performance can be maintained.

In the present embodiment, as a mechanism by which the falling off of the inorganic particle 4 from the sheet surface can be suppressed, it is thought that the organic fiber 1 and the inorganic fiber 15 are fused to each other by the fusion portion 5 to form a three-dimensional and strong framework, the shape of the heat insulation material 80 is retained, and deformation or compression of the heat transfer suppression sheet is suppressed. In addition, it is thought that, regardless of the presence or absence of the mica sheet 51 on the surface of the heat insulation material 80, when the organic fiber 1 or the inorganic fiber 15 is exposed on the surface of the heat insulation material 80, the impact applied to the heat insulation material 80 can be absorbed, and the inorganic particle 4 is held.

Note that, also in the heat insulation material 80, the fusion portion 5 does not need to completely cover the outer peripheral surface of the organic fiber 1, and there may be a region where the fusion portion 5 is not present. Even in such a case, the effect of retaining the inorganic particle 4 can be sufficiently obtained.

### <Heat Insulation Material (Structure Example 6)>

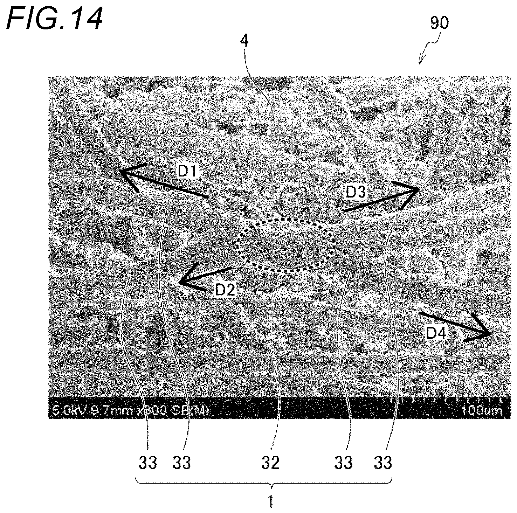

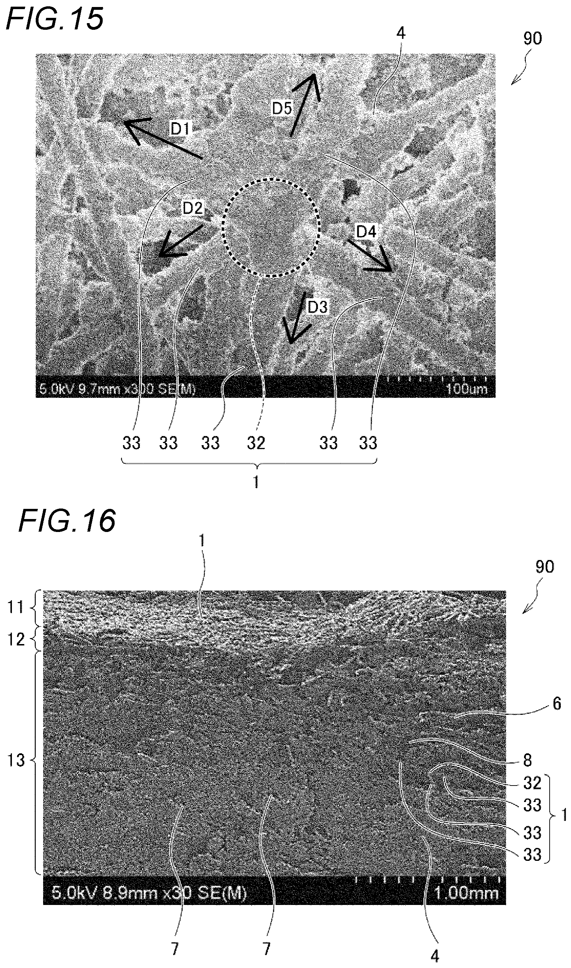

Fig. 14 is a photograph substituted for a drawing showing Structure Example 6 of the heat insulation material for use in the heat transfer suppression sheet according to the embodiment of the present invention. Fig. 15 is a photograph substituted for a drawing showing another region of the heat insulation material shown in Fig. 14. Fig. 16 is a photograph substituted for a drawing showing a cross section of the heat insulation material shown in Figs. 14 and 15. In Structure Example 6 shown in Figs. 14 to 16, the same components as those in Structure Example 4 of the heat insulation material shown in Figs. 9 to 11 are denoted by the same reference numerals, and detailed description thereof will be omitted. Note that, a heat insulation material 90 shown in Figs. 14 to 16 can be used instead of the heat insulation material 10 of the heat transfer suppression sheet 50 shown in Fig. 1.

As shown in Fig. 14, the heat insulation material 90 contains the inorganic particle 4 and the organic fiber 1. In addition, at least some of organic fibers 1 have a branched structure including a base portion 32 and a branched portion 33 extending from the base portion 32. In the present embodiment, the branched portion 33 extends from the base portion 32 in four directions, i.e., a direction D1, a direction D2, a direction D3, and a direction D4. A framework is formed by the base portion 32 and a plurality of branched portions 33.

Another region of the heat insulation material 90 shown in Fig. 15 also includes the organic fiber 1 having a branched structure including the base portion 32 and the branched portion 33 extending from the base portion 32. Note that, the organic fiber 1 shown in Fig. 15 includes the base portion 32 and the branched portion 33 extending from the base portion 32 in five directions, that is, the direction D1, the direction D2, the direction D3, the direction D4, and a direction D5. The base portion 32 is thicker than the plurality of branched portions 33.

Further, as shown in Figs. 14 and 15, in the present embodiment, the inorganic particle 4 is fused to the surface of the organic fiber 1, and accordingly, the surface of the organic fiber 1 is covered with the inorganic particle 4.

In addition, as shown in the cross-sectional view in Fig. 16, the plurality of pores 7 are formed in the heat insulation material 90. Further, in the heat insulation material 90, the organic fibers 1 are at least partially fused to each other, to form the fiber bundle 6, and the void portion 8 is formed between the organic fibers 1 constituting the fiber bundle 6. Note that, the organic fiber 1 having a branched structure including the base portion 32 and the branched portion 33 extending in three directions from the base portion 32 can be also be observed in Fig. 16.

Further, the fiber layer 11 is formed on at least a portion of a first surface and a second surface of the heat insulation material 90 that are orthogonal to a thickness direction of the heat insulation material 90. The fiber layer 11 is formed in a layer shape on the surface (first surface and second surface) of the heat insulation material 90 by at least partially fusing the plurality of organic fibers 1 to each other. In addition, the composite layer 12 is formed between the fiber layer 11 and the base layer 13 containing the inorganic particle 4 and the organic fiber 1. The composite layer 12 is a layer in which a portion of the fiber layer 11 and a portion of the inorganic particle 4 are mixed together. Specifically, the composite layer 12 is a region including a plurality of organic fibers 1 fused to each other and the inorganic particle 4 fused to the organic fiber 1.

Note that, the fiber bundle 6 is formed by entangling 10 or more organic fibers 1 with each other and partially fusing the organic fibers 1 to each other, and is disposed in any direction inside the heat insulation material 90. On the other hand, the fiber layer 11 is a layer formed by gathering 10 or more organic fibers 1 on the surface of the heat insulation material 90, and extends in a direction substantially parallel to the surface, for example, in a stripe shape.

In the heat insulation material 90 configured in this manner, since at least some of the organic fibers 1 have a branched structure including the base portion 32 and the branched portion 33, the organic fiber 1 serves as a framework and can retain the shape of the heat insulation material 90. In the present embodiment, the base portion 32 is formed by a fused portion in which the organic fibers 1 are fused to each other. Specifically, since the base portion 32 is a portion in which some of the plurality of organic fibers 1 are in contact with each other and melted and then solidified, the base portion 32 is thicker than the branched portion 33. Therefore, since the entire framework can be firmly supported by the base portion 32, the strength of the heat insulation material 90 can be remarkably improved.

In the heat insulation material 90, at least some of the organic fibers 1 have a branched structure including the base portion 32 and the branched portion 33 extending from the base portion 32 in at least three directions. The branched structure can also be checked in a cross-sectional photograph or the like of the heat insulation material 90. As a method of more easily checking the branched structure, a method of observing a cross section obtained by tearing the heat insulation material 90 in a plane direction orthogonal to the thickness direction thereof is exemplified. In this manner, by observing the cross section, it is possible to easily check the organic fiber 1 having a branched structure including the base portion 32 and the branched portion 33 extending from the base portion 32 in at least three directions. The base portion 32 and the branched portion 33 will be described in more detail below.

### (Base Portion (Fused Portion))

In the case of using a binder fibers having a core-sheath structure as a material for the heat insulation material 90, the fused portion is formed in a portion where a plurality of binder fibers are in contact with each other by once melting sheath portions of the binder fibers by heating and then cooling the sheath portions. When the binder fiber having a core-sheath structure is used as the material for the heat insulation material 90, the fused portion contains a second organic material constituting the sheath portion.

In this manner, in the process of producing the heat transfer suppression sheet 50, when the sheath portions in a region where the plurality of binder fibers are in contact with each other are melted by heating, the amount of the sheath portions (second organic material) to be melted is larger than that in the case of melting the sheath portion of one binder fiber, and a thick fused portion (base portion 32) is formed after cooling. As a result, the framework is firmly supported by the base portion 32.

### (Branched Portion)

The branched portion 33 extends from the base portion 32 in at least three directions and has an effect of retaining the inorganic particle 4. In addition, since the framework is formed by the base portion 32 and the branched portion 33, the strength of the heat transfer suppression sheet 50 can be improved. Accordingly, a high powder falling suppression effect can be obtained.

In the case of using the binder fiber having a core-sheath structure as the organic fiber 1, the branched portion 33 is a portion of the binder fiber having a core-sheath structure, and includes a core portion made of a first organic material and a sheath portion made of a second organic material.

The branched portion 33 extending from the base portion 32 can form a framework made of the organic fiber 1 as long as it extends in at least three directions. In addition, it is preferable that the plurality of branched portions 33 extend in three-dimensional directions different from each other, and accordingly, a three-dimensional and strong framework can be formed.

In the heat insulation material 90, since the plurality of branched portions 33 extend from the base portion 32, the inorganic particle 4 can be retained by the plurality of branched portions 33, and a high powder falling suppression effect can be obtained by a synergistic effect with the effect of improving the sheet strength by framework formation. Therefore, for example, even in the case where a portion of the battery cells 20a, 20b, and 20c expands and a compressive stress or impact is applied to the heat transfer suppression sheet during charging and discharging, the shape of the heat insulation material 90 can be retained. As a result, it is possible to suppress falling of the inorganic particle 4 (powder falling), and it is possible to prevent a decrease in heat insulation effect due to compressive deformation of the heat insulation material 90.

A mechanism by which the falling off of the inorganic particle 4 from the surface of the heat insulation material 90 can be suppressed is thought to be the effect of retaining the inorganic particle 4 by the branched portion 33 in addition to the same effect as that in the heat insulation material 60 of Structure Example 3. Further, when the inorganic particle 4 is fused to the surface of the organic fiber 1, the organic fiber 1 appears to have a large fiber diameter, so that the strength is higher than the strength of only containing the organic fiber 1, and a high effect retaining the inorganic particle 4 can be obtained.

Note that, in the heat insulation material 90, there may be a region where the inorganic particle 4 is not partially fused to the outer peripheral surface of the organic fiber 1. Even in such a case, the effect of retaining the inorganic particle 4 can be sufficiently obtained.

In addition, since the heat insulation material 90 contains the organic fiber 1 having high flexibility, the flexibility of the heat insulation material 90 can be improved, the organic fibers 1 are easily entangled with each other, and the effect of improving the sheet strength can be obtained.

Further, since the heat insulation material 90 has the plurality of pores 7, and the void portion 8 is provided between the plurality of organic fibers 1 constituting the fiber bundle 6, the heat insulation performance can be improved by the air heat insulation effect. In addition, due to the presence of the void portion 8, the organic fiber 1 is in a state of not being completely restrained, so that the flexibility and the strength of the heat insulation material 90 can be further improved. The void portion 8 does not need to be formed in the entire region between the plurality of organic fibers 1, and as long as the void portion 8 is formed at least partially between the organic fibers 1, the heat transfer suppression effect can be obtained.

Further, the heat insulation material 90 includes the fiber bundle 6 and the fiber layer 11, and therefore can have a much higher sheet strength than the case where the organic fibers 1 are disposed in a dispersed manner. In addition, the fiber layer 11 is not simply disposed on the base layer 13, and the composite layer 12, in which a portion of the fiber layer 11 and a portion of the inorganic particle 4 are mixed together, is provided between the fiber layer 11 and the base layer 13, so that the fiber layer 11 is reliably restrained to the surface of the heat insulation material 90. Therefore, the strength of the heat insulation material 90 can be improved.

### <Heat Insulation Material (Structure Example 7)>

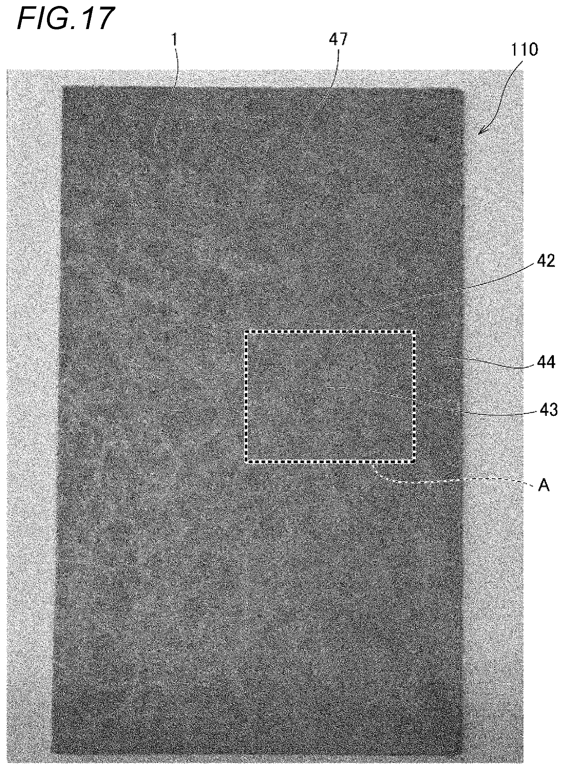

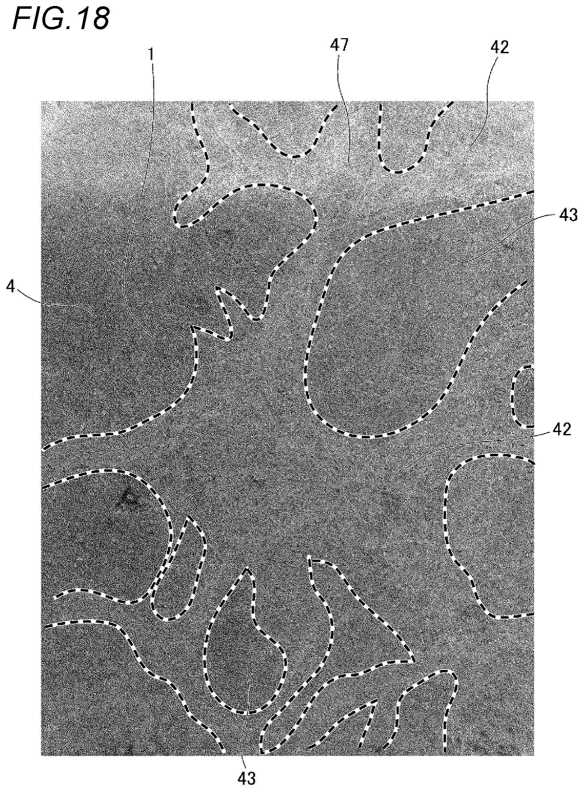

Fig. 17 is a photograph substituted for a drawing showing Structure Example 7 of the heat insulation material for use in the heat transfer suppression sheet according to the embodiment of the present invention. Fig. 18 is a photograph substituted for a drawing showing an enlarged view of a portion of the heat insulation material shown in Fig. 17. In Structure Example 7 shown in Figs. 17 and 18, the same components as those in Structure Example 2 of the heat insulation material shown in Fig. 5 are denoted by the same reference numerals, and detailed description thereof will be omitted. Note that, a heat insulation material 110 shown in Figs. 17 and 18 can be used instead of the heat insulation material 10 of the heat transfer suppression sheet 50 shown in Fig. 1.

As shown in Figs. 17 and 18, the heat insulation material 110 contains the inorganic particle 4 and the organic fiber 1. A surface of the heat insulation material 110 includes a first region 42 having a stripe-like fiber bundle 47 composed of a plurality of organic fibers 1 and a second region 43 having no fiber bundle 47. In the present description, the fiber bundle 47 is formed by entangling 10 or more organic fibers 1 with each other, and extends in a stripe shape in a direction substantially parallel to the surface of the heat insulation material 110.

That is, in the case of observing the surface of the heat insulation material 110, as shown in Fig. 18, it is observed that the plurality of organic fibers 1 are entangled in the first region 42. On the other hand, in the second region 43, although several organic fibers 1 are observed in some places, no fiber bundle 47 formed by entangling the plurality of organic fibers 1 is observed.

Note that, in the present embodiment, the first region 42 and the second region 43 have a sea-island structure, and the second region 43 corresponding to an island portion is formed to be surrounded by the first region 42 corresponding to a sea portion.

In the heat insulation material 110, since the fiber bundle 47 formed by entangling the plurality of organic fibers 1 is present to extend in a stripe shape on the surface of the heat insulation material 110, the strength of the heat insulation material 110 can be improved. In addition, since the entire surface is not covered with the fiber bundle 47, and there is the first region 42 having the fiber bundle 47 and the second region having no fiber bundle 47, the flexibility of the heat insulation material 110 is also excellent. Further, since the fiber bundle 47 is present on the surface of the heat insulation material 110, even in the case where an impact or pressure is applied to the heat insulation material 110, the fiber bundle 47 can absorb and alleviate the impact or pressing force. Therefore, the falling off of the inorganic particle 4 (powder falling) can be suppressed, and a decrease in heat insulation performance of the heat insulation material 110 can be prevented.

Note that, in the heat insulation material 110, the organic fiber 1 and the fiber bundle 47 formed by entangling the organic fibers 1 are present not only on the surface of the heat insulation material 110 but also inside the heat insulation material 110. Accordingly, a more excellent strength can be obtained.

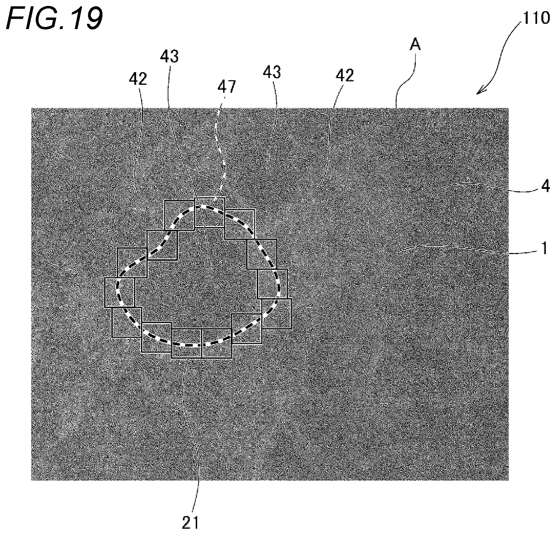

A length of the fiber bundle 47 formed to extend on the surface of the heat insulation material 110 is preferably long to some extent. An example of a method of defining the length of the fiber bundle 47 will be described with reference to Fig. 19.

As shown in Fig. 19, on the surface of the heat insulation material 110, rectangular virtual frames 21 are disposed along the fiber bundle 47 extending in a stripe shape. In the present embodiment, the virtual frame 21 has a size of 5 mm square, and the virtual frames 21 are disposed to be continuous with each other. At this time, when there is a fiber bundle 47 passing through at least three continuous virtual frames 21, it can be determined that the effect of improving the strength of the heat insulation material 110 is sufficient.

It is also possible to simply measure the length of the fiber bundle 47 extending in a stripe shape. For example, use can be made of a method in which a string or the like is disposed on the surface of the heat insulation material 110 along the fiber bundle 47 and then the length of the string is measured. In the case of measuring the length of the continuous fiber bundle 47, when there is a fiber bundle 47 having a length of 20 mm or more, the effect of improving the strength of the heat insulation material 110 can be sufficiently obtained.

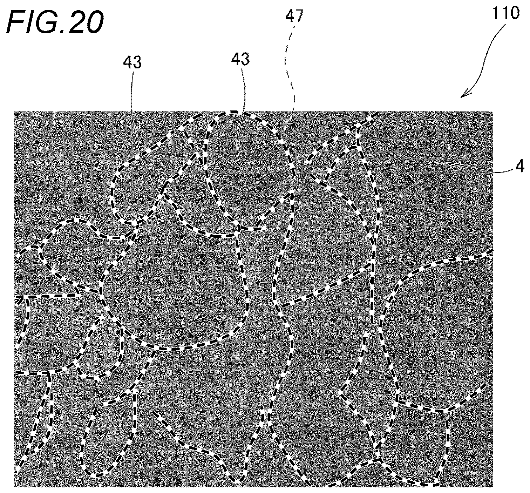

Further, as shown in Fig. 20, when the fiber bundle 47 is interconnected in a mesh shape on the surface of the heat insulation material 110, the sheet strength can be further improved.

Although Structure Example 1 to Structure Example 7 of the heat insulation material have been described above, the structure of the heat insulation material is not limited thereto, and heat insulation materials having various structures can be used. Specifically, the heat insulation materials of Structure Example 1 to Structure Example 7 have an excellent heat insulation effect, and also have various properties such as the effect of suppressing the powder falling, the effect of further improving the strength, and the effect of retaining the shape. Therefore, as shown in Fig. 1, by stacking the mica sheet 51 on the heat insulation material, a heat transfer suppression sheet having more excellent impact resistance can be obtained.

Hereinafter, materials constituting the heat transfer suppression sheet 50 according to the present embodiment will be described. First, materials constituting the heat insulation material will be described.

### <Organic Fiber>

The organic fiber 1 imparts the flexibility to the heat insulation material, and, by fusing the inorganic particle 4 and other organic fibers 1 to the surface thereof, has the effect of retaining the strength and the shape of the sheet. A single-component organic fiber may be used as a material for the organic fiber 1 in the heat insulation material, and it is preferable to use a binder fiber having a core-sheath structure. The binder fiber having a core-sheath structure includes a core portion extending in a longitudinal direction of the fiber, and a sheath portion formed to cover an outer peripheral surface of the core portion. In addition, the core portion is composed of a first organic material, the sheath portion is composed of a second organic material, and a melting point of the first organic material is higher than a melting point of the second organic material. In the case where the binder fiber having a core-sheath structure is used as the material, the core portion corresponds to the organic fiber 1 in the heat insulation material. During the production of the heat insulation material, the second organic material constituting the sheath portion is melted and then solidified again, so that the sheath portion becomes the fusion portion 5 in the heat insulation material.

In the case where the binder fiber having a core-sheath structure is used as the material for the organic fiber 1, the core portion, i.e., the first organic material constituting the organic fiber 1, is not particularly limited as long as it has a melting point higher than that of the sheath portion, i.e., the second organic material, present on the outer peripheral surface of the organic fiber 1. Examples of the first organic material include at least one kind selected from a polyethylene terephthalate, a polypropylene, and nylon.

### (Content of Organic Fiber)

In the present embodiment, when a content of the organic fiber 1 in the heat insulation material is appropriately controlled, a sufficient framework reinforcement effect can be obtained.

The content of the organic fiber 1 is preferably 2 mass% or more, and more preferably 4 mass% or more with respect to a total mass of the heat insulation material. When the content of the organic fiber 1 is too large, a content of the inorganic particle 4 decreases relatively. Therefore, in order to obtain a desired heat insulation performance, the content of the organic fiber is preferably 10 mass% or less, and more preferably 8 mass% or less, with respect to the total mass of the heat insulation material.

### (Fiber Length of Organic Fiber)

A fiber length of the organic fiber 1 is not particularly limited, and from the viewpoint of ensuring moldability and processability, an average fiber length of the organic fiber is preferably 10 mm or less.

On the other hand, from the viewpoint of making the organic fiber 1 function as a framework and ensuring a compressive strength of the heat insulation material, the average fiber length of the organic fiber 1 is preferably 0.5 mm or more.

### <Fusion Portion>

The fusion portion 5 is formed by heating and melting the surface of the organic fiber 1 or the sheath portion of the binder fiber having a core-sheath structure, and then cooling the same, and fuses the inorganic particle 4 to the surface of the organic fiber 1 and fuses the organic fibers 1 to each other. In the case where the binder fiber having a core-sheath structure is used as the material for the organic fiber 1, the fusion portion 5 contains the second organic material constituting the sheath portion.

### (Second Organic Material)

The second organic material is not particularly limited as long as it has a melting point lower than that of the first organic material constituting the organic fiber 1. Examples of the second organic material include at least one kind selected from a polyethylene terephthalate, a polyethylene, a polypropylene, and nylon.

Note that, the melting point of the second organic material is preferably 90°C or higher, and more preferably 100°C or higher. In addition, the melting point of the second organic material is preferably 150°C or lower, and more preferably 130°C or lower.

### <Inorganic Particle>

As the inorganic particle, a single kind of inorganic particle may be used, or two or more kinds of inorganic particles may be used in combination. From the viewpoint of a heat transfer suppression effect, as the kind of the inorganic particle, a particle composed of at least one kind of inorganic material selected from an oxide particle, a carbide particle, a nitride particle, and an inorganic hydrate particle is preferably used, and more preferably an oxide particle is used. The form thereof is not particularly limited. It is preferable to contain at least one kind selected from a nanoparticle, a hollow particle, and a porous particle. Specifically, a silica nanoparticle, a metal oxide particle, an inorganic balloon such as a microporous particle or a hollow silica particle, a particle composed of a thermally expandable inorganic material, a particle composed of a hydrous porous material, or the like can also be used.

When an average secondary particle diameter of the inorganic particle is 0.01 µm or more, the inorganic particle is easily available and an increase in production cost can be suppressed. When the average secondary particle diameter is 200 µm or less, a desired heat insulation effect can be obtained. Therefore, the average secondary particle diameter of the inorganic particle is preferably 0.01 µm or more and 200 µm or less, and more preferably 0.05 µm or more and 100 µm or less.

Note that, when two or more kinds of inorganic particles having different heat transfer suppression effects are combined, a heating element can be cooled in multiple stages and a heat absorption effect can be exhibited over a wider temperature range. Specifically, it is preferable to use a large-diameter particle and a small-diameter particle in combination. For example, in the case of using a nanoparticle as one of the inorganic particles, it is preferable to contain an inorganic particle composed of a metal oxide as the other inorganic particle. Hereinafter, the inorganic particle will be described in more detail, with the small-diameter inorganic particle as a first inorganic particle and the large-diameter inorganic particle as a second inorganic particle.

### <First Inorganic Particle>

### (Oxide Particle)

The oxide particle has a high refractive index and has a high effect of diffusely reflecting light, so that when the oxide particle is used as the first inorganic particle, radiant heat transfer can be suppressed, particularly in a high temperature range with abnormal heat generation or the like. As the oxide particle, at least one kind of particle selected from silica, titania, zirconia, zircon, barium titanate, zinc oxide, and alumina can be used. That is, among the above oxide particle that can be used as the inorganic particle, only one kind or two or more kinds of oxide particles may be used. Particularly, silica is a component having a high heat insulation property, and titania is a component having a high refractive index compared to other metal oxides, and has a high effect of diffusely reflecting light and blocking radiant heat in a high temperature range of 500°C or higher. Therefore, silica and titania are most preferably used as the oxide particle.

### (Average primary particle diameter of oxide particle: 0.001 µm or more and 50 µm or less)

Since the particle diameter of the oxide particles may influence an effect of reflecting radiant heat, when an average primary particle diameter thereof is limited to a predetermined range, an even higher heat insulation property can be obtained.

That is, when the average primary particle diameter of the oxide particle is 0.001 µm or more, a wavelength thereof is sufficiently larger than a wavelength of light that contributes to heating, and it diffusely reflects the light efficiently. Therefore, in a high temperature range of 500°C or higher, the radiant heat transfer of heat within the heat insulation material can be suppressed, and the heat insulation property can be further improved.

On the other hand, when the average primary particle diameter of the oxide particle is 50 µm or less, even with compression, the number of contact points between the particles does not increase, and it is difficult to form a conductive heat transfer path. Therefore, the influence on the heat insulation property particularly in a normal temperature range where the conductive heat transfer is dominant can be reduced.

Note that, in the present invention, the average primary particle diameter can be determined by observing particles with a microscope, comparing the particles with a standard scale, and taking an average of any 10 particles.

### (Nanoparticle)

In the present invention, the nanoparticle refers to a nanometer-order particle having a spherical or nearly spherical shape and having an average primary particle diameter of less than 1 µm. The nanoparticle has a low density and thus suppresses the conductive heat transfer, and when the nanoparticle is used as the first inorganic particle, the three-dimensionally connected pores 7 are much finer, so that an excellent heat insulation property of suppressing convective heat transfer can be obtained. Therefore, it is preferable to use a nanoparticle since it can suppress the conduction of heat between adjacent nanoparticles during normal use of a battery in a normal temperature range.

Further, when a nanoparticle having a small average primary particle diameter is used as the oxide particle, even in the case where the heat insulation material is compressed by expansion due to thermal runaway of the battery cell and the internal density increases, an increase in conductive heat transfer of the heat insulation material can be suppressed. This is thought to be because the nanoparticle tends to form fine voids between particles due to a repulsive force caused by static electricity, and the bulk density thereof is low, so that the particle is used for filling so as to provide a cushioning property.

Note that, in the present invention, in the case of using the nanoparticle as the first inorganic particle, the kind thereof is not particularly limited as long as the above definition of nanoparticle is met. For example, since a silica nanoparticle is a material having a high heat insulation property and has a few contact points between particles, the amount of heat conducted by the silica nanoparticle is smaller than that in a case of using a silica particle having a large particle diameter. In addition, since a generally available silica nanoparticle has a bulk density of about 0.1 (g/cm³), for example, even in the case where battery cells disposed on both sides of the heat insulation material thermally expand and a large compressive stress is applied to the heat insulation material, the size (area) or the number of contact points between silica nanoparticles does not increase remarkably, and the heat insulation property can be maintained. Therefore, it is preferable to use a silica nanoparticle as the nanoparticle. Examples of the silica nanoparticle include wet silica, dry silica, and aerogel. A silica nanoparticle that is particularly suitable for the present embodiment will be described below.

Generally, the particles of wet silica are agglomerated, whereas the particles of dry silica can be dispersed. Since the conductive heat transfer is dominant in heat conduction in a temperature range of 300°C or lower, the dry silica in which particles can be dispersed can provide a more excellent heat insulation performance than the wet silica.

Note that, the heat insulation material according to the present embodiment is preferably produced by a production method in which a mixture containing materials is processed into a sheet shape by a dry method. Therefore, as the inorganic particle, it is preferable to use dry silica or silica aerogel which has a low thermal conductivity.

### (Average primary particle diameter of nanoparticle: 1 nm or more and 100 nm or less)

When the average primary particle diameter of the nanoparticle is limited to a predetermined range, an even higher heat insulation property can be obtained.

That is, when the average primary particle diameter of the nanoparticle is 1 nm or more and 100 nm or less, the convective heat transfer and the conductive heat transfer of the heat within the heat insulation material can be suppressed particularly in a temperature range of lower than 500°C, and the heat insulation property can be further improved. In addition, even in the case where a compressive stress is applied, voids remaining between the nanoparticles and contact points between many particles can suppress the conductive heat transfer, and the heat insulation property of the heat insulation material can be maintained.

Note that, the average primary particle diameter of the nanoparticle is more preferably 2 nm or more, and still more preferably 3 nm or more. On the other hand, the average primary particle diameter of the nanoparticle is more preferably 50 nm or less, and still more preferably 10 nm or less.

### (Inorganic Hydrate Particle)

The inorganic hydrate particle exhibits a so-called "heat absorption effect" that the inorganic hydrate particle receives heat from a heating element, thermally decomposes when reaching a thermal decomposition start temperature or higher, releases crystal water thereof, and lowers the temperature of the heating element and surroundings. The inorganic hydrate particle forms a porous material after releasing the crystal water, and exhibits a heat insulation effect due to countless air pores thereof.

Specific examples of the inorganic hydrate include aluminum hydroxide (Al(OH)₃), magnesium hydroxide (Mg(OH)₂), calcium hydroxide (Ca(OH)₂), zinc hydroxide (Zn(OH)₂), iron hydroxide (Fe(OH)₂), manganese hydroxide (Mn(OH)₂), zirconium hydroxide (Zr(OH)₂), and gallium hydroxide (Ga(OH)₃).

For example, aluminum hydroxide has about 35% crystal water, and as shown in the following formula, thermally decomposes to release the crystal water and exhibits a heat absorption effect. Then, after releasing the crystal water, aluminum hydroxide forms alumina (Al₂O₃), which is a porous material, and functions as a heat insulation material.

2Al(OH)₃ → Al₂O₃ + 3H₂O

Note that, the heat transfer suppression sheet 50 according to the present embodiment is preferably interposed between, for example, battery cells, but in a battery cell that has experienced thermal runaway, the temperature rapidly rises to over 200°C and continues to rise to about 700°C. Therefore, it is preferable that the inorganic particle is composed of an inorganic hydrate whose thermal decomposition start temperature is 200°C or higher.

The thermal decomposition start temperature of the above inorganic hydrates is about 200°C for aluminum hydroxide, is about 330°C for magnesium hydroxide, is about 580°C for calcium hydroxide, is about 200°C for zinc hydroxide, is about 350°C for iron hydroxide, is about 300°C for manganese hydroxide, is about 300°C for zirconium hydroxide, and is about 300°C for gallium hydroxide. All of these almost overlap the temperature range of the rapid temperature rise of a battery cell that has experienced thermal runaway, and can effectively prevent the temperature rise. Therefore, these are preferred inorganic hydrates.

### (Average secondary particle diameter of inorganic hydrate particle: 0.01 µm or more and 200 µm or less)

In the case of using the inorganic hydrate particle as the first inorganic particle, when the average particle diameter thereof is too large, it takes a certain amount of time for the first inorganic particle (inorganic hydrate) near the center of the heat insulation material to reach the thermal decomposition temperature thereof, so that the first inorganic particle near the center of the sheet may not be completely thermally decomposed. Therefore, the average secondary particle diameter of the inorganic hydrate particle is preferably 0.01 µm or more and 200 µm or less, and more preferably 0.05 µm or more and 100 µm or less.

### (Particle Composed of Thermally Expandable Inorganic Material)

Examples of the thermally expandable inorganic material include vermiculite, bentonite, mica, and perlite.

### (Particle Composed of Hydrous Porous Material)

Specific examples of the hydrous porous material include zeolite, kaolinite, montmorillonite, acid clay, diatomaceous earth, wet silica, dry silica, aerogel, mica, and vermiculite.

### (Inorganic Balloon)

The heat insulation material used in the present invention may contain an inorganic balloon as the first inorganic particle.

When an inorganic balloon is contained, the convective heat transfer or the conductive heat transfer of the heat within the heat insulation material can be suppressed in a temperature range of lower than 500°C, and the heat insulation property of the heat insulation material can be further improved.

As the inorganic balloon, at least one kind selected from a whitebait balloon, a silica balloon, a fly ash balloon, a perlite balloon, and a glass balloon can be used.

### (Content of inorganic balloon: 60 mass% or less with respect to total mass of heat insulation material)

A content of the inorganic balloon is preferably 60 mass% or less with respect to the total mass of the heat insulation material.

### (Average particle diameter of inorganic balloon: 1 µm or more and 100 µm or less)

An average particle diameter of the inorganic balloon is preferably 1 µm or more and 100 µm or less.

### <Second Inorganic Particle>

In the case where the heat insulation material contains two kinds of inorganic particles, the second inorganic particle is not particularly limited as long as it is different from the first inorganic particle in material, particle diameter, or the like. As the second inorganic particle, an oxide particle, a carbide particle, a nitride particle, an inorganic hydrate particle, a silica nanoparticle, a metal oxide particle, an inorganic balloon such as a microporous particle or a hollow silica particle, a particle composed of a thermally expandable inorganic material, a particle composed of a hydrous porous material, or the like can be used. Details of these are as described above.

Note that, the nanoparticle has extremely low conductive heat transfer, and can maintain an excellent heat insulation property even in the case where a compressive stress is applied to the heat insulation material. In addition, a metal oxide particle such as titania has a high effect of blocking radiant heat. Further, when a large-diameter inorganic particle and a small-diameter inorganic particle are used, the small-diameter inorganic particle enters gaps between the large-diameter inorganic particles, leading to a more dense structure, and the heat transfer suppression effect can be improved. Therefore, in the case of using, for example, a nanoparticle as the first inorganic particle, it is preferable that the heat insulation material further contains, as the second inorganic particle, a particle composed of a metal oxide having a diameter larger than that of the first inorganic particle.

Examples of the metal oxide include silicon oxide, titanium oxide, aluminum oxide, barium titanate, zinc oxide, zircon, and zirconium oxide. Particularly, titanium oxide (titania) is a component having a high refractive index compared to other metal oxides, and has a high effect of diffusely reflecting light and blocking radiant heat in a high temperature range of 500°C or higher. Therefore, titania is most preferably used.

In the case where at least one kind of particle selected from a dry silica particle and silica aerogel is used as the first inorganic particle, and at least one kind of particle selected from titania, zircon, zirconia, silicon carbide, zinc oxide, and alumina is used as the second inorganic particle, in order to obtain an excellent heat insulation performance within a temperature range of 300°C or lower, the content of the first inorganic particle is preferably 50 mass% or more, more preferably 60 mass% or more, and still more preferably 70 mass% or more, with respect to a total mass of the inorganic particles. In addition, the content of the first inorganic particle is preferably 95 mass% or less, more preferably 90 mass% or less, and still more preferably 80 mass% or less, with respect to the total mass of the inorganic particles.

On the other hand, in order to obtain an excellent heat insulation performance within a temperature range of higher than 300°C, the content of the second inorganic particle is preferably 5 mass% or more, more preferably 10 mass% or more, and still more preferably 20 mass% or more, with respect to the total mass of the inorganic particles. In addition, the content of the second inorganic particle is preferably 50 mass% or less, more preferably 40 mass% or less, and still more preferably 30 mass% or less, with respect to the total mass of the inorganic particles.

### (Average primary particle diameter of second inorganic particle)

In the case where the second inorganic particle composed of a metal oxide is contained in the heat insulation material, when an average primary particle diameter of the second inorganic particle is 1 µm or more and 50 µm or less, the radiant heat transfer can be efficiently suppressed in a high temperature range of 500°C or higher The average primary particle diameter of the second inorganic particle is more preferably 5 µm or more and 30 µm or less, and most preferably 10 µm or less.

### (Content of Inorganic Particle)

In the present embodiment, when a total content of the inorganic particles 4 in the heat insulation material is appropriately controlled, a sufficient heat insulation property can be ensured in the heat insulation material.

The total content of the inorganic particles 4 is preferably 60 mass% or more, and more preferably 70 mass% or more with respect to the total mass of the heat insulation material. When the total content of the inorganic particles 4 is too large, the content of the organic fiber decreases relatively. Therefore, in order to obtain a sufficient framework reinforcement effect and inorganic particle retention effect, the total content of the inorganic particles 4 is preferably 95 mass% or less, and more preferably 90 mass% or less, with respect to the total mass of the heat insulation material.

Note that, the content of the inorganic particle 4 in the heat insulation material can be calculated, for example, by heating the heat insulation material at 800°C, decomposing organic components, and then measuring the mass of the remaining portion.

### <Inorganic Fiber>

As the inorganic fiber 15, a single kind of inorganic fiber may be used, or two or more kinds of inorganic fibers may be used in combination. Examples of the inorganic fiber include ceramic-based fibers such as a silica fiber, an alumina fiber, an alumina silicate fiber, a zirconia fiber, a carbon fiber, a soluble fiber, a refractory ceramic fiber, an aerogel composite, a magnesium silicate fiber, an alkaline earth silicate fiber, a potassium titanate fiber, a silicon carbide fiber, and a potassium titanate whisker fiber, glass-based fibers such as a glass fiber, glass wool, and slag wool, and natural mineral-based fibers other than the above fibers, such as rock wool, a basalt fiber, wollastonite, and a mullite fiber.

These inorganic fibers are preferred in terms of heat resistance, strength, easy availability, and the like. Among the inorganic fibers, at least one kind selected from a silica-alumina fiber, an alumina fiber, a silica fiber, rock wool, an alkaline earth silicate fiber, and a glass fiber is particularly preferred from the viewpoint of handling properties.

The cross-sectional shape of the inorganic fiber is not particularly limited, and examples thereof include a circular cross section, a flat cross section, a hollow cross section, a polygonal cross section, and a core cross section. Among them, an irregular cross section fiber having a hollow cross section, a flat cross section, or a polygonal cross section can be preferably used since the heat insulation property is slightly improved.

The lower limit of an average fiber length of the inorganic fiber is preferably 0.1 mm, and the lower limit is more preferably 0.5 mm. On the other hand, the upper limit of the average fiber length of the inorganic fiber is preferably 50 mm, and the upper limit is more preferably 10 mm. When the average fiber length of the inorganic fiber is less than 0.1 mm, the inorganic fibers are unlikely to be entangled with each other, and the mechanical strength of the heat insulation material may decrease. On the other hand, when the average fiber length is more than 50 mm, a reinforcement effect can be obtained, but the inorganic fibers may not be able to entangle tightly with each other, or a single inorganic fiber may curl up, making continuous voids more likely to occur, and thus there is a risk that the heat insulation property decreases.

The lower limit of an average fiber diameter of the inorganic fiber is preferably 1 µm, the lower limit is more preferably 2 µm, and the lower limit is still more preferably 3 µm. On the other hand, the upper limit of the average fiber diameter of the inorganic fiber is preferably 15 µm, and the upper limit is more preferably 10 µm. When the average fiber diameter of the inorganic fiber is less than 1 µm, the mechanical strength of the inorganic fiber may decrease. In addition, from the viewpoint of the influence on human health, the average fiber diameter of the inorganic fiber is preferably 3 µm or more. On the other hand, when the average fiber diameter of the inorganic fiber is larger than 15 µm, solid heat transfer using the inorganic fiber as a medium may increase, resulting in a decrease in heat insulation property, and the moldability and the strength of the heat insulation material may deteriorate.

### (Content of Inorganic Fiber)

In the present embodiment, in the case where the heat insulation material contains an inorganic fiber, a content of the inorganic fiber is preferably 3 mass% or more and 15 mass% or less with respect to the total mass of the heat insulation material.

In addition, the content of the inorganic fiber is preferably 5 mass% or more and 10 mass% or less with respect to the total mass of the heat insulation material. With such contents, a shape retention property, pressing force resistance, wind pressure resistance, and an ability to retain the inorganic particle of the inorganic fiber are exhibited in a well-balanced manner. In addition, when the content of the inorganic fiber is appropriately controlled, the organic fiber 1 and the inorganic fiber are entangled with each other to form a three-dimensional network, so that an effect of retaining the inorganic particle 4 and other blending materials to be described later can be further improved.

### <Other Blending Materials>

Note that, the heat insulation material according to the present embodiment can further contain a binding material, a colorant, and the like, if necessary. All of these are useful for reinforcing the heat insulation material and improving the moldability, and a total amount thereof is preferably 10 mass% or less with respect to the total mass of the heat insulation material.

### <Mica Sheet>

The mica sheet 51 is obtained by processing a mica sheet material containing mica into a sheet shape. The mica sheet material preferably contains an oxide-based particle, an oxide-based fiber, and the like, in addition to mica. Specific examples thereof include SiO₂, Al₂O₃, Ti₂O₃, but the present invention is not limited to these materials. Note that, it is more preferable to use a mica sheet composed of a natural mineral. The sheet shape may be a flat sheet having no holes or having holes. However, it is also possible to use a mica sheet having holes in at least a portion of a central portion or another region of the mica sheet such that the mica sheet can follow the battery cell without cracking when the battery cell expands or shrinks.

### [Method for Producing Heat Transfer Suppression Sheet]

A method for producing the heat transfer suppression sheet according to the present embodiment, in particular, an example using the heat insulation material of Structure Example 2 will be described in detail below.

For example, a binder fiber (not shown) having a core-sheath structure, the inorganic particle 4, and the inorganic fiber 15 are charged into a mixer such as a V-type mixer at a predetermined ratio to prepare a mixture.

Note that, as described above, the binder fiber is preferably a fiber having a core-sheath structure, which includes a core portion composed of the first organic material and a sheath portion composed of the second organic material. In this case, the melting point of the first organic material is higher than the melting point of the second organic material.

Thereafter, the obtained mixture is charged into a predetermined mold and pressurized with a pressing machine or the like, and the obtained molded body is heated to melt the sheath portion of the binder fiber. Thereafter, the heated molded body is cooled, whereby the second organic material constituting the molten sheath portion and the inorganic particle 4 present around the binder fiber are fused to the core portion (organic fiber 1), and are also fused to each other in a region where the binder fibers are in contact with each other. Accordingly, the heat insulation material 40 processed into a sheet shape can be obtained.

Thereafter, the heat insulation material 40 is disposed between a pair of mica sheets 51 prepared in advance, and both are fixed. A method of fixing the heat insulation material 40 and the mica sheet 51 to each other is not particularly limited, and various methods such as a method of bonding the both with an adhesive or the like, a method of sewing the both with a thread or the like, a method of sandwiching and fixing the both with a fixing jig, a method of covering the both with a film or the like, and a method of covering the both with a thermally compressible film and then heating to shrink the film to fix the both can be used.

Note that, the heat insulation material 10 containing no inorganic fiber 15 or the heat insulation material containing no organic fiber 1 can also be obtained in the same manner as the heat insulation material 40, and the use of the organic fiber 1 and the inorganic fiber 15 can be freely selected.

Note that, when the above materials of the heat insulation material are mixed, pressurized, and heated, the entangled organic fibers 1 exposed on the surface are heated to be formed as the fiber layer 11 on the surface of the heat insulation material 40. The fiber layer 11 obtained in this manner improves the strength of the heat insulation material 40 and also has an effect of alleviating an impact on the surface of the heat insulation material 40.

The above heat insulation material is preferably produced by a dry method. In the case of using a dry method, the inorganic particle 4 used is suitable for the dry method, and a solvent such as water, which is necessary for molding in a wet method, is not added to the mixture. However, during the production of the heat insulation material, in order to prevent a powder such as the inorganic particle 4 from flying around and prevent raw materials from being difficult to handle, a small amount of a solvent such as water can also be added within the range of the dry method. For example, by adding a small amount of a solvent such as water to the mixture, scattering of the inorganic particle during the production can be suppressed.

In addition, since the binder fiber having a core-sheath structure is used as the material in the heat insulation material, and the melting point of the first organic material constituting the core portion is higher than the melting point of the second organic material constituting the sheath portion, when heating the mixture, the sheath portion can be melted while the core portion remains. Then, after cooling, the outer peripheral surface of the core portion (organic fiber 1) is covered with the second organic material including the inorganic particle 4, so that the inorganic particle 4 can be retained. The organic fiber 1 to which the inorganic particle 4 is fused appears to have a larger fiber diameter, and therefore has higher strength than the organic fiber 1 alone. Further, since the binder fiber is present in an irregular direction in the mixture, the organic fibers 1 are fused to each other in the region where the binder fibers are in contact with each other, forming a three-dimensional framework. As a result, the shape of the entire heat insulation material can be retained with even a higher strength.

Note that, even in the case where an organic fiber without a core-sheath structure is used as the binder fiber, depending on temperature setting, it is possible that only the surface of the organic fiber is melted while a center portion thereof remains, the inorganic particle is deposited on the surface, or the organic fibers are fused to each other. However, during the production of the heat insulation material, it is common to perform heating from one side or both sides orthogonal to the thickness direction, and since a material having a high heat insulation performance is used, strict temperature control is required in order to raise the temperature to the same degree on a surface side and on a center side of the sheet in the thickness direction.

With respect to this, when a binder fiber having a core-sheath structure in which the melting point of the first organic material constituting the core portion is higher than the melting point of the second organic material constituting the sheath portion is used, the temperature can be set extremely easily to make the core portion remain and to melt the sheath portion. As a result, the obtained heat insulation material has an ideal structure in which the organic fibers 1 are fused to each other to form a framework that retains the strength of the sheet on both the surface side and the center side, and the fusion portion 5 containing the inorganic particle 4 is formed on the surface of the organic fiber 1. Therefore, it is preferable to use the binder fiber having a core-sheath structure as described above as the material for the heat insulation material.

Note that, as described above, after the heat insulation material and the mica sheet 51 are stacked, the surface of the stacked body may be covered with a film or the like. Examples of a polymer film include a film composed of a polyimide, a polycarbonate, PET, p-phenylene sulfide, a polyetherimide, a cross-linked polyethylene, a flame-retardant chloroprene rubber, polyvinylidene fluoride, rigid vinyl chloride, polybutylene terephthalate, PTFE, PFA, FEP, ETFE, rigid PCV, flame-retardant PET, a polystyrene, a polyethersulfone, a polyamide-imide, a polyacrylonitrile, a polyethylene, a polypropylene, and a polyamide. Note that, a method of covering the surface with a film is not particularly limited, and examples thereof include a method of performing pasting with an adhesive or the like, a method of wrapping the heat insulation material and the mica sheet 51 with a film, and a method of housing the heat insulation material and the mica sheet 51 in a bag-shaped film.

Next, the preferred binder fiber, heating conditions, and other binder materials used in the method for producing the heat transfer suppression sheet 50 according to the present embodiment will be described.

### <Binder Fiber>

In the present embodiment, in the case of using the binder fiber 3 having a core-sheath structure, the binder fiber 3 is not particularly limited as long as the melting point of the first organic material constituting the core portion is higher than the melting point of the second organic material constituting the sheath portion. As the first organic material constituting the core portion, at least one kind selected from a polyethylene terephthalate, a polypropylene, and nylon can be selected. In addition, as the second organic material constituting the sheath portion, at least one kind selected from a polyethylene terephthalate, a polyethylene, a polypropylene, and nylon can be selected.

When the melting point of the first organic material constituting the core portion is sufficiently higher than the melting point of the second organic material constituting the sheath portion, a setting tolerance of the heating temperature in the heating step can be expanded, and temperature setting for obtaining a desired structure can be made easier. For example, the melting point of the first organic material is preferably 60°C or more higher, more preferably 70°C or more higher, and still more preferably 80°C or more higher than the melting point of the second organic material.

Note that, the binder fiber 3 having a core-sheath structure as described above is generally commercially available, and the materials constituting the core portion and the sheath portion may be the same as or different from each other. Examples of the binder fiber in which the core portion and the sheath portion are composed of the same material having different melting points include one in which the core portion and the sheath portion are composed of a polyethylene terephthalate, one in which the core portion and the sheath portion are composed of a polypropylene, and one in which the core portion and the sheath portion are composed of nylon. Examples of the binder fiber in which the core portion and the sheath portion are composed of different materials include one in which the core portion is composed of a polyethylene terephthalate and the sheath portion is composed of a polyethylene, and one in which the core portion is composed of a polypropylene and the sheath portion is composed of a polyethylene.

In the present embodiment, the melting point of the second organic material constituting the sheath portion of the binder fiber 3 refers to a melting temperature at which the second organic material begins to undergo melting deformation, and softening accompanied by a change in shape is also considered to be a kind of melting deformation. The melting point of the sheath portion of the binder fiber can be measured, for example, by the following method.

A binder fiber to be measured is disposed in contact with a glass fiber having a higher melting point, heated from room temperature to, for example, 200°C at a heating rate of 5°C/min, and thereafter cooled to room temperature. At this time, when the surface of the binder fiber undergoes melting deformation and is fused at a portion in contact with the glass fiber, or the cross-sectional shape of the binder fiber changes, it can be determined that the melting point of the second organic material constituting the sheath portion is 200°C or lower. In the present embodiment, when the heating temperature is changed variously, and the fusion state of the binder fiber and the glass fiber after cooling by the above method or the cross-sectional shape of the binder fiber is observed, the melting point of the second organic material constituting the sheath portion can be determined.

### (Content of Binder Fiber)

In the present embodiment, in the case of using the binder fiber 3 having a core-sheath structure as the material, when a content of the binder fiber in the mixture is appropriately controlled, a sufficient framework reinforcement effect can be obtained in the obtained heat insulation material.

The content of the binder fiber 3 is preferably 5 mass% or more, and more preferably 10 mass% or more, with respect to a total mass of the mixture. When the content of the binder fiber 3 is too large, the content of the inorganic particle 4 decreases relatively. Therefore, in order to obtain a desired heat insulation performance, the content of the binder fiber 3 is preferably 25 mass% or less, and more preferably 20 mass% or less, with respect to the total mass of the mixture.

### (Hot Melt Powder)

In the present embodiment, in addition to the binder fiber 3 and the inorganic particle 4, the mixture may contain a hot melt powder as the binder material. The hot melt powder is a powder that contains, for example, a third organic material different from the first organic material and the second organic material, and has a property of being melted by heating. By containing the hot melt powder in the mixture and heating the same, when the hot melt powder is cooled after melting, the hot melt powder, including the surrounding inorganic particle 4, hardens. Therefore, the falling off of the inorganic particle 4 from the heat insulation material can be further suppressed.

Examples of the hot melt powder include those having various melting points, and it is sufficient to select a hot melt powder having an appropriate melting point in consideration of the melting points of the core portion and the sheath portion of the binder fiber used. Specifically, when the third organic material, which is a component constituting the hot melt powder, has a melting point lower than that of the first organic material constituting the organic fiber, the heating temperature can be set to melt the sheath portion and the hot melt powder while the core portion remains. For example, when the melting point of the hot melt powder is equal to or lower than the melting point of the sheath portion, it is sufficient to set the heating temperature during the production between the melting point of the core portion and the melting point of the sheath portion, so that the heating temperature can be set much more easily.

On the other hand, the kind of the hot melt powder to be used can also be selected such that the melting point of the hot melt powder is between the melting point of the core portion and the melting point of the sheath portion. In the case of using the hot melt powder having such a melting point, when both the sheath portion and the hot melt powder are cooled and harden after melting, the organic fiber (core portion) 1 and the surrounding molten sheath portion, and the hot melt powder present in gaps in the inorganic particle 4 firstly harden. As a result, the position of the organic fiber 1 can be fixed, and thereafter the molten sheath portion is fused to the organic fiber, making it easier to form a three-dimensional framework. Therefore, the strength of the entire sheet can be further improved.

When the melting point of the third organic material constituting the hot melt powder is sufficiently lower than the melting point of the first organic material constituting the core portion, the setting tolerance of the heating temperature in the heating step can be expanded, and the temperature setting for obtaining a desired structure can be made easier. For example, the melting point of the first organic material is preferably 60°C or more higher, more preferably 70°C or more higher, and still more preferably 80°C or more higher than the melting point of the third organic material.

Note that, the melting point of the hot melt powder (third organic material) is preferably 80°C or higher, and more preferably 90°C or higher. In addition, the melting point of the hot melt powder (third organic material) is preferably 180°C or lower, and more preferably 150°C or lower. Examples of the component constituting the hot melt powder include a polyethylene, a polyester, a polyamide, and ethylene vinyl acetate.

### (Content of Hot Melt Powder)

In the case where the hot melt powder is contained in the mixture in order to suppress the falling off of the inorganic particle, the powder falling suppression effect can be obtained even when the content thereof is very small. Therefore, the content of the hot melt powder is preferably 0.5 mass% or more, and more preferably 1 mass% or more, with respect to the total mass of the mixture.

On the other hand, when the content of the hot melt powder is increased, the content of the inorganic particle 4 or the like decreases relatively. Therefore, in order to obtain a desired heat insulation performance, the content of the hot melt powder is preferably 5 mass% or less, and more preferably 4 mass% or less, with respect to the total mass of the mixture.

### <Heating Conditions>

In the case of using the binder fiber having a core-sheath structure as the material for the heat insulation material, the heating temperature in the heating step is preferably a temperature higher than the melting point of the second organic material constituting the sheath portion and lower than the melting point of the first organic material constituting the core portion. By setting the heating temperature like this, as described above, the strength of the sheet can be ensured by the core portion both on the surface side and the center side of the sheet, and the inorganic particle 4 can be retained by the fusion portion 5.

Specifically, the heating temperature in the heating step is set to preferably 10°C or more higher, and more preferably 20°C or more higher than the melting point of the second organic material constituting the sheath portion. On the other hand, the heating temperature is set to preferably 10°C or more lower, and more preferably 20°C or more lower than the melting point of the first organic material constituting the core portion.

A heating time is not particularly limited, and it is preferable to set a heating time that allows the sheath portion to be sufficiently melted. For example, it can be set to 3 minutes or longer and 15 minutes or shorter.

In the case where the hot melt powder is contained as the material for the heat insulation material, the heating temperature in the heating step is set to preferably 10°C or more higher, and more preferably 20°C or more higher than the higher one of the melting point of the second organic material constituting the sheath portion and the melting point of the third organic material constituting the hot melt powder. On the other hand, the heating temperature is set to preferably 10°C or more lower, and more preferably 20°C or more lower than the melting point of the first organic material constituting the core portion. By setting the heating temperature like this, a strong framework can be formed, the strength of the sheet can be further improved, and the falling off of the inorganic particle 4 can be prevented by the fusion portion 5 and the like.

### <Thickness of Heat Transfer Suppression Sheet>

A thickness of the heat transfer suppression sheet according to the present embodiment is not particularly limited, and is preferably 0.05 mm or more and 10 mm or less. When the thickness is 0.05 mm or more, a sufficient compressive strength can be obtained. On the other hand, when the thickness is 10 mm or less, a good heat insulation property of the heat transfer suppression sheet can be obtained.

### [Battery Pack]

An example of a battery pack to which the heat transfer suppression sheet 50 according to the embodiment of the present invention is applied is as shown in Fig. 2 above. Here, a configuration and effects of the battery pack will be specifically described with reference to Fig. 2. Note that, as described above, the heat insulation material 10 in the heat transfer suppression sheet 50 shown in Fig. 2 can be replaced with other heat insulation materials within the scope of the present invention, in addition to the heat insulation materials having various structures described above.

As shown in Fig. 2, the battery pack 100 includes the plurality of battery cells 20a, 20b, and 20c, and the heat transfer suppression sheet 50 according to the present embodiment, and the plurality of battery cells are connected in series or in parallel. For example, the heat transfer suppression sheet 50 according to the present embodiment is interposed between the battery cell 20a and the battery cell 20b and between the battery cell 20b and the battery cell 20c. Further, the battery cells 20a, 20b, and 20c and the heat transfer suppression sheet 50 are housed in the battery case 30.

Note that, the heat transfer suppression sheet 50 is as described above.

In the battery pack 100 configured in this manner, even in the case where a certain battery cell 20a has a high temperature, since the heat transfer suppression sheet 50 having a heat transfer suppression effect is present between the battery cell 20a and the battery cell 20b, it is possible to suppress the propagation of heat to the battery cell 20b.

In addition, since the heat transfer suppression sheet 50 according to the present embodiment includes the mica sheet 51, the heat insulation material 10 and the adjacent battery cell 20b are protected by the mica sheet 51 in the case where the battery cell 20a ruptures due to a high temperature and scattered matters are generated. Therefore, it is possible to suppress the influence of the scattered matters on the battery cell 20b, it is possible to suppress the breakage of the heat insulation material 10, and it is possible to maintain a high heat insulation property between the battery cell 20a and the battery cell 20b.

Note that, the battery pack 100 according to the present embodiment is not limited to the battery pack shown in Fig. 2. For example, the heat transfer suppression sheet 50 may be disposed not only between the battery cell 20a and the battery cell 20b and between the battery cell 20b and the battery cell 20c, but also between the battery cells 20a, 20b, and 20c and the battery case 30, or may be pasted to an inner surface of the battery case 30.

In the battery pack 100 configured in this manner, in the case where a certain battery cell ignites, it is possible to suppress the flame from spreading to the outside of the battery case 30. For example, the battery pack 100 according to the present embodiment is used in an electric vehicle (EV) or the like, and is sometimes disposed under a passenger's floor. In this case, even when the battery cell ignites, the safety of the passenger can be ensured.

In addition, since the heat transfer suppression sheet 50 can be disposed not only between the battery cells but also between the battery cells 20a, 20b, and 20c and the battery case 30, it is not necessary to newly prepare a flame retardant material or the like, and a safe battery pack 100 can be easily formed at a low cost.

In the battery pack according to the present embodiment, the heat transfer suppression sheet 50 disposed between the battery cells 20a, 20b, and 20c and the battery case 30 may be in contact with the battery cell or may have a gap therebetween. However, in the case where there is a gap between the heat transfer suppression sheet 50 and the battery cells 20a, 20b, and 20c, even when the temperature of any one battery cell of the plurality of battery cells rises and the volume expands, the deformation of the battery cell is allowable.

Note that, the heat transfer suppression sheet 50 according to the present embodiment can be produced into various shapes depending on the production method. Therefore, it is not influenced by the shapes of the battery cells 20a, 20b, and 20c and the battery case 30, and can be adapted to any shape. Specifically, it can be applied to cylindrical batteries, flat batteries, and the like, in addition to prismatic batteries.

Although various embodiments have been described above, it is needless to say that the present invention is not limited to such examples. It is apparent to those skilled in the art that various changes and modifications can be conceived within the scope of the claims, and it is understood that such changes and modifications are also encompassed within the technical scope of the present invention. In addition, the constituent elements in the above embodiments may be freely combined without departing from the gist of the present invention.

Note that, the present application is based on a Japanese patent application (Japanese Patent Application No. 2023-053783) filed on March 29, 2023 and a Japanese patent application (Japanese Patent Application No. 2024-042573) filed on March 18, 2024, and the contents thereof are incorporated herein by reference.

### REFERENCE SIGNS LIST

1 organic fiber
3 binder fiber
4 inorganic particle
5 fusion portion
6, 47 fiber bundle
7 pore
8 void portion
10, 40, 60, 70, 80, 90, 110 heat insulation material
11 fiber layer
12 composite layer
13 base layer
14 matrix
15 inorganic fiber
16 fiber portion
17 second organic material
18 base material portion
20a, 20b, 20c battery cell
28 air Layer
30 battery case
31 contact portion
32 base portion
33 branched portion
42 first region
43 second region
50 heat transfer suppression sheet
51 mica sheet
100 battery pack

## Claims

1. A heat transfer suppression sheet comprising:
a heat insulation material containing an inorganic particle and an organic fiber or an inorganic fiber; and
a mica sheet stacked on at least one of a first surface and a second surface of the heat insulation material orthogonal to a thickness direction.

2. The heat transfer suppression sheet according to claim 1, wherein the heat insulation material has a plurality of three-dimensionally connected pores.

3. The heat transfer suppression sheet according to claim 1, wherein in a case where the heat insulation material contains the organic fiber, the organic fiber includes a fusion portion covering at least a portion of a surface of the organic fiber, and at least a portion of the inorganic particle is fused to the organic fiber by the fusion portion.

4. The heat transfer suppression sheet according to claim 1, wherein the heat insulation material essentially contains the inorganic fiber.

5. The heat transfer suppression sheet according to claim 4, wherein the inorganic fiber is at least one kind selected from a silica-alumina fiber, an alumina fiber, a silica fiber, rock wool, an alkaline earth silicate fiber, and a glass fiber.

6. The heat transfer suppression sheet according to claim 3, wherein the heat insulation material includes a fiber layer on at least a portion of the first surface and the second surface, the fiber layer being formed by at least partially fusing a plurality of the organic fibers to each other by the fusion portion.

7. The heat transfer suppression sheet according to claim 6, wherein
the heat insulation material essentially contains the inorganic fiber, and
the fiber layer contains the inorganic fiber.

8. The heat transfer suppression sheet according to claim 3, wherein
in the heat insulation material, the organic fiber is composed of a first organic material, and the fusion portion contains a second organic material, and
a melting point of the second organic material is lower than a melting point of the first organic material.

9. The heat transfer suppression sheet according to claim 8, wherein in the heat insulation material, the melting point of the second organic material is lower than the melting point of the first organic material by 60°C or more.

10. The heat transfer suppression sheet according to claim 8, wherein
in the heat insulation material,
the first organic material is at least one kind selected from a polyethylene terephthalate, a polypropylene, and nylon, and
the second organic material is at least one kind selected from a polyethylene terephthalate, a polyethylene, a polypropylene, and nylon.

11. The heat transfer suppression sheet according to claim 1, wherein in the heat insulation material, the inorganic particle is a particle composed of at least one kind of inorganic material selected from an oxide particle, a carbide particle, a nitride particle, and an inorganic hydrate particle.

12. The heat transfer suppression sheet according to claim 11, wherein in the heat insulation material, the inorganic particle includes at least one kind of particle selected from a dry silica particle and silica aerogel.

13. The heat transfer suppression sheet according to claim 12, wherein in the heat insulation material, the inorganic particle further includes at least one kind of particle selected from titania, zircon, zirconia, silicon carbide, zinc oxide, and alumina.

14. A battery pack comprising:
a plurality of battery cells; and
the heat transfer suppression sheet according to any one of claims 1 to 13, wherein
the plurality of battery cells are connected in series or in parallel.
